(19) Europäisches Patentamt / European Patent Office / Office européen des brevets

(11) **EP 3 158 700 B1**

(12) **FASCICULE DE BREVET EUROPEEN**

(45) Date de publication et mention
de la délivrance du brevet:
**29.08.2018 Bulletin 2018/35**

(21) Numéro de dépôt: **15729841.5**

(22) Date de dépôt: **17.06.2015**

(51) Int Cl.:
*H04L 25/03* (2006.01)          *H04L 25/02* (2006.01)
*H04B 17/309* (2015.01)

(86) Numéro de dépôt international:
**PCT/EP2015/063583**

(87) Numéro de publication internationale:
**WO 2015/193366 (23.12.2015 Gazette 2015/51)**

(54) **PROCEDE D'ESTIMATION D'UN CANAL DE PROPAGATION RADIOELECTRIQUE**

VERFAHREN ZUR SCHÄTZUNG EINES RADIOELEKTRISCHEN AUSBREITUNGSKANALS

METHOD FOR ESTIMATING A RADIOELECTRIC PROPAGATION CHANNEL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.06.2014 FR 1401367**

(43) Date de publication de la demande:
**26.04.2017 Bulletin 2017/17**

(73) Titulaire: **Airbus DS SAS**
**78990 Elancourt (FR)**

(72) Inventeur: **MEGE, Philippe**
**F-92340 Bourg la Reine (FR)**

(74) Mandataire: **Cabinet Camus Lebkiri**
**25 rue de Maubeuge**
**75009 Paris (FR)**

(56) Documents cités:
**FR-A1- 2 983 666     US-A1- 2005 008 108**

**Description**

DOMAINE TECHNIQUE

La présente invention concerne un procédé d'estimation d'un canal de propagation radioélectrique entre un émetteur et un récepteur. Elle concerne également un équipement récepteur et un programme d'ordinateur correspondants.

L'invention se rapporte plus particulièrement aux systèmes de transmission multiporteuses, par exemple de type à multiplexage par division en fréquences orthogonales OFDM (« Orthogonal Frequency Division Multiplexing ») ou de type SC-FDMA (Single-Carrier / Frequency Division Multiple Access) ou encore de type FB-MC (Filter Bank Multi-Carrier), ces techniques étant toutes des techniques de transmission de type multiporteuses.

ETAT DE L'ART

Ce type de transmission est de plus en plus fréquemment utilisé. Il a notamment été adopté dans les systèmes LTE (« Long Term Evolution »), TEDS (« TETRA Enhanced Data Service »), DAB (« Digital Audio Broadcasting ») et DVB-T (« Digital Video Broadcasting-Terrestrial »).

Dans les systèmes de transmission multiporteuses, les données sont en général codées sous forme de symboles organisés en trames envoyées dans un signal par un émetteur à destination d'un récepteur à travers un canal de propagation, chaque trame utilisant $N_f$ sous-porteuses fréquentielles sur chacune desquelles sont émis $N_t$ symboles, soit n nombre total de symboles dans le plan temps-fréquence égal à $n = N_t \times N_f$.

Le canal de propagation est défini comme étant le chemin radioélectrique qu'emprunte le signal émis depuis l'émetteur vers le récepteur. De manière générale, le signal reçu par le récepteur s'écrit sous la forme $R = E.C + B$ où $R$ est un vecteur colonne de dimension $n$ constitué des symboles reçus, $E$ est une matrice diagonale de dimension $(n,n)$ dont la diagonale est constituée des $n$ symboles émis dans une trame, $C$ est un vecteur colonne, dit vecteur canal, de dimension $n$ représentant le canal de propagation et $B$ est un vecteur colonne de dimension $n$ représentant le bruit du canal. On représentera conventionnellement dans la suite les vecteurs $R$, $C$ et $B$ sous la forme de la concaténation de $N_t$ vecteurs, chacun étant de dimension $N_f$, le premier vecteur correspondant aux $N_f$ symboles, correspondant au premier symbole de la trame, successivement situées sur $N_f$ sous-porteuses, et les vecteurs suivants correspondants de façon similaire aux $N_t$ symboles successifs. De même, dans la description qui suit, la diagonale de la matrice $E$ est constituée par la concaténation, pour les $N_t$ symboles successifs dans la trame, des $N_f$ valeurs successives du canal de propagation pour les sous-porteuses successives.

Le canal de propagation comprend, pour un signal émis par l'émetteur, une pluralité de trajets entre l'émetteur et le récepteur dus notamment à la réflexion et/ou à la diffraction du signal sur des obstacles tels que, par exemple, des collines, des bâtiments, des véhicules etc. Chaque trajet est ainsi caractérisé par un retard et une atténuation et le délai entre le signal reçu par le récepteur sur le trajet radioélectrique le plus court et le signal reçu par le récepteur sur le trajet radioélectrique le plus long constitue l'étalement temporel du canal. L'ensemble des trajets avec leurs puissances et leurs retards constituent le profil temporel du canal. Selon les caractéristiques de l'environnement de propagation, un profil temporel typique de propagation est attendu.

Les différents trajets empruntés par le signal peuvent en outre se combiner entre eux de façon destructive, notamment lorsque les réflexions du signal ont lieu sur des obstacles situés à proximité du récepteur et/ou de l'émetteur. Plus précisément, chacun des trajets peut être affecté par un évanouissement ou fading dit « de Rayleigh », connu de l'homme du métier, dont la pseudo-fréquence est égale au double de la fréquence Doppler, cette fréquence Doppler étant déterminée à partir de la vitesse de l'émetteur et/ou du récepteur lorsqu'au moins l'un des deux est mobile et de la fréquence porteuse du signal transmis. La différence entre la fréquence la plus faible et la plus élevée parmi les signaux reçus par le récepteur sur les différents trajets radioélectrique d'un signal monochrome émis par l'émetteur constitue l'étalement fréquentiel du canal. Le spectre de puissance de ce signal reçu est appelé profil fréquentiel du canal. Selon les caractéristiques de l'environnement de propagation, un profil fréquentiel typique de propagation est attendu.

Un canal à multi-trajets avec fading de Rayleigh peut donc être sélectif en temps et/ou en fréquence.

Afin d'estimer le canal de propagation, certains symboles, répartis dans le plan temps-fréquence, sont insérés dans chaque trame parmi les informations utiles destinées au récepteur. Ces symboles, appelés "symboles pilotes" sont connus de l'émetteur et du récepteur. Ils sont utilisés à des fins de synchronisation et d'estimation du canal de propagation.

Dans un système multiporteuses, l'effet du canal de propagation sur un symbole de données, dans le plan temps-fréquence, est généralement modélisé simplement par un coefficient multiplicatif complexe que le récepteur cherche à estimer afin de déterminer le symbole émis avec le minimum possible d'erreur. L'estimation de canal est définie comme étant la détermination de ces coefficients pour tous les symboles émis.

De manière connue, le récepteur commence, en général, par estimer le canal à la position des symboles pilotes puis il effectue une estimation du canal sur l'ensemble de la trame. L'estimation du canal sur les positions ne correspondant pas à des symboles pilotes est en général effectuée au moyen d'une interpolation à partir de l'estimation du canal sur les symboles pilotes.

Le document FR2814011 décrit un procédé d'estimation de canal permettant de prendre en compte les caractéristiques physiques connues du canal de propagation. Cependant, le procédé décrit est très contraignant en termes de complexité.

Afin de résoudre en partie ces inconvénients, la demande de brevet FR2983666 A1 déposée par la Demanderesse décrit un procédé d'estimation de canal de complexité réduite permettant de prendre en compte les caractéristiques physiques connues du canal de propagation et mettant notamment en oeuvre le critère du maximum a posteriori ou MAP.

La résolution du problème d'estimation du canal au sens du MAP revient à maximiser le terme

$$e^{-\frac{\|\mathbf{R}-\mathbf{EC}\|^2}{2\sigma^2}} \cdot e^{-\frac{\mathbf{C}^H.\mathbf{M}_1^{-1}.\mathbf{C}}{2}}$$, c'est-à-dire à minimiser l'opposé du logarithme de cette expression égal à

$$\frac{\|\mathbf{R}-\mathbf{EC}\|^2}{\sigma^2} + \mathbf{C}^H.\mathbf{M}_1^{-1}.\mathbf{C}$$, tout en répondant aux variations physiques du canal en temps et en fréquence, exprimées au moyen de la matrice de covariance $\mathbf{M_1}$ globale du canal. $\sigma^2$ représente la variance du bruit sur le canal.

La matrice de covariance $\mathbf{M_1}$ globale du canal est obtenue à partir de la connaissance des variations physiques du canal, à savoir :

- le profil temporel du canal, défini dans une fenêtre temporelle, qui entraine des variations du canal de propagation le long de l'axe des fréquences et à partir duquel peut être calculée une matrice de covariance $\mathbf{M_{1f}}$ exprimant donc les variations fréquentielles du canal dues audit profil temporel, et
- le profil fréquentiel, défini dans une fenêtre fréquentielle, qui entraine des variations du canal de propagation le long de l'axe du temps et à partir duquel peut être calculée une matrice de covariance $\mathbf{M_{1t}}$ exprimant donc les variations temporelles du canal dues audit profil fréquentiel.

La matrice de covariance temporelle $\mathbf{M_{1t}}$ exprimant la contrainte temporelle du canal peut être obtenue par Transformée de Fourier inverse du profil fréquentiel du canal tandis que la matrice de covariance fréquentielle $\mathbf{M_{1f}}$ exprimant la contrainte fréquentielle du canal peut être obtenue par Transformée de Fourier du profil temporel du canal. La matrice de covariance $\mathbf{M_1}$ globale du canal est le produit tensoriel de Kronecker des deux matrices de covariance temporelle $\mathbf{M_{1t}}$ et fréquentielle $\mathbf{M1_f}$ : $M1 = M1t \otimes M1f$.

Souvent, l'hypothèse théorique considérée pour estimer le canal dans le domaine fréquentiel correspond à un profil temporel du canal qui est symétrique et centré sur une position dite « de synchronisation temporelle du signal ». Une telle position de synchronisation temporelle du signal est généralement prédéterminée de manière connue, par exemple, au moyen d'une séquence de synchronisation temporelle spécifique (ou par d'autres moyens), et est utilisée par le récepteur pour synchroniser temporellement le signal reçu de l'émetteur, c'est-à-dire pour déterminer un instant précis associé à la fenêtre du profil temporel du signal (dans ce cas le milieu de la fenêtre). Dans ce cas, les valeurs propres et les vecteurs propres de la matrice de covariance fréquentielle $\mathbf{M_{1f}}$ sont réels.

Or, en pratique, le profil temporel du canal n'est pas nécessairement symétrique et centré sur la position de synchronisation temporelle. Il peut être, par exemple, symétrique mais centré sur une position centrale effective temporelle différente de la position dite "de synchronisation temporelle" du signal car la synchronisation temporelle est souvent réalisée sur les premiers trajets de propagation des signaux reçus, qui sont en général les moins atténués, alors que des trajets ultérieurs peuvent être plus atténués et très retardés mais encore significatifs. Dans ce cas, les valeurs propres de la matrice de covariance fréquentielle $\mathbf{M_{1f}}$ sont réelles mais les vecteurs propres de la matrice de covariance fréquentielle $\mathbf{M_{1f}}$ sont complexes.

De même, la contrainte théorique considérée dans le domaine temporel correspond à un profil fréquentiel du canal qui est symétrique et centré sur une position dite « de synchronisation fréquentielle du signal ». Une telle position de synchronisation fréquentielle du signal peut être prédéterminée de manière connue, par exemple, au moyen d'une séquence de synchronisation fréquentielle spécifique (ou par d'autres moyens), et est utilisée par le récepteur pour synchroniser fréquentiellement le signal reçu de l'émetteur, c'est-à-dire pour déterminer une fréquence précise associée à la fenêtre d'étalement du profil fréquentiel du signal (dans ce cas le milieu de la fenêtre). Dans ce cas, les valeurs propres et les vecteurs propres de la matrice de covariance $\mathbf{M_{1t}}$ sont réels.

Or, en pratique, le profil fréquentiel du canal n'est pas nécessairement symétrique et centré sur la position de synchronisation fréquentielle. Il peut être, par exemple, symétrique mais centré sur une position centrale effective fréquentielle différente de la position dite "de synchronisation fréquentielle" du signal. Dans ce cas, les valeurs propres de la matrice de covariance $M_{1t}$ sont réelles mais les vecteurs propres de la matrice de covariance $M_{1t}$ sont complexes.

La résolution du problème d'estimation du canal au sens du MAP avec des vecteurs propres complexes dans les matrices de covariance temporelle $M_{1f}$ et/ou fréquentielle $M_{1t}$ rend le récepteur complexe et coûteux car sa mémoire et la capacité de son processeur doivent être importantes afin de traiter les données reçues pour estimer le canal de propagation, ce qui présente un inconvénient important.

PRESENTATION GENERALE DE L'INVENTION

La portée de l'invention est définie par les revendications indépendantes. La présente invention vise à résoudre cet inconvénient en proposant un procédé d'estimation d'un canal de propagation radioélectrique entre un émetteur et un récepteur qui permette de réduire la complexité et le coût d'implémentation du récepteur tout en permettant l'estimation d'un canal dont les contraintes correspondent à celles de la réalité.

A cet effet, l'invention concerne tout d'abord un procédé d'estimation d'un canal de propagation radioélectrique entre un émetteur et un récepteur, ledit émetteur émettant un signal comprenant des trames utilisant chacune $N_f$ sous-porteuses fréquentielles sur chacune desquelles sont émis $N_t$ symboles, où parmi l'ensemble des symboles, certains symboles, dits symboles pilotes, sont connus dudit récepteur, ledit signal étant synchronisé par le récepteur à partir d'une position de synchronisation temporelle et d'une position de synchronisation fréquentielle, le profil temporel du canal étant symétrique et centré sur une position centrale effective temporelle $\tau_{moyen}$ distincte de la position de synchronisation temporelle, le profil fréquentiel du canal étant symétrique et centré sur une position centrale effective fréquentielle $f_{moyen}$ distincte de la position de synchronisation fréquentielle. Le procédé, mis en oeuvre par le récepteur, est remarquable par le fait qu'il comprend les étapes de :

- détermination d'une matrice de covariance fréquentielle intermédiaire $M_{2f}$ représentant les variations fréquentielles du canal dues à un profil temporel théorique du canal, symétrique et centré sur la position de synchronisation temporelle, ce profil temporel théorique du canal étant obtenu à partir du profil temporel du canal translaté en temps de ($-\tau_{moyen}$) de façon à être symétrique autour de la position de synchronisation temporelle (position zéro temporelle);
- détermination d'une matrice de covariance temporelle intermédiaire $M_{2t}$ représentant les variations temporelles du canal dues à un profil fréquentiel théorique du canal, symétrique et centré sur la position de synchronisation fréquentielle, ce profil fréquentiel théorique du canal étant obtenu à partir du profil fréquentiel du canal translaté en fréquence de ($-f_{moyen}$) de façon à être symétrique autour de la position de synchronisation fréquentielle (position zéro fréquentielle) ;
- calcul d'une matrice de covariance globale intermédiaire $M_2$ selon le produit de Kronecker: $M_2 = M_{2t} \otimes M_{2f}$ ;
- calcul d'une matrice E' selon la relation $E' = E.T^H$ , où $T = T_t \otimes T_f$ et dans laquelle $E$ est une matrice diagonale comprenant les symboles pilotes émis dans une trame aux positions des symboles pilotes, les autres symboles

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$

étant nuls, $T_f$ est une matrice diagonale ($N_f$, $N_f$) de centrage définie par où

$$\varphi = 2\pi.\frac{\tau_{moyen}}{N_f}$$ et $T_t$ est une matrice diagonale ($N_t$, $N_t$) de centrage définie par

$$T_t = \begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$ où $$\psi = -2\pi.\frac{f_{moyen}}{N_t} \; ;$$

- calcul d'un vecteur colonne représentant un canal intermédiaire **C'** qui minimise la relation

$$\frac{\|R - E'.C'\|^2}{\sigma^2} + \mathbf{C'}^H.\mathbf{M}_2^{-1}.$$

$\mathbf{C'}$ où $\mathbf{R}$ est un vecteur colonne de dimension ($N_t$ x $N_f$) constitué des symboles reçus, et ;

- estimation du canal de propagation selon la relation $C = T^H.C'$, à partir du vecteur $\mathbf{C'}$ calculé.

Par les termes « détermination d'une matrice de covariance fréquentielle intermédiaire $\mathbf{M_{2f}}$ représentant les variations fréquentielles du canal dues au profil temporel du canal centré sur la position de synchronisation temporelle », on entend qu'on détermine les effets du profil temporel du signal sur les variations fréquentielles du signal lorsque ce profil temporel est centré sur la position de synchronisation temporelle du signal.

De même, par les termes « détermination d'une matrice de covariance temporelle intermédiaire $\mathbf{M_{2t}}$ représentant les variations temporelles du canal, dues au profil fréquentiel du canal centré sur la position de synchronisation fréquentielle », on entend qu'on détermine les effets du profil fréquentiel du signal sur les variations temporels du signal lorsque ce profil fréquentiel est centré sur la position de synchronisation fréquentielle du signal.

Le produit de Kronecker de deux matrices $\mathbf{A}$ et $\mathbf{B}$, la matrice $\mathbf{A}$ ayant pour composantes ($a_{ij}$), où i est un entier compris entre 1 et m et j est un entier compris entre 1 et n, est le produit matriciel noté $\mathbf{A} \otimes \mathbf{B}$ et défini par l'expression suivante :

$$\mathbf{A} \otimes \mathbf{B} = \begin{pmatrix} a_{11}\mathbf{B} & \cdots & \cdots & a_{1n}\mathbf{B} \\ \vdots & \cdots & \cdots & \vdots \\ a_{m1}\mathbf{B} & \cdots & \cdots & a_{mn}\mathbf{B} \end{pmatrix}.$$

Lorsque le profil temporel du canal est symétrique et centré autour de la position centrale effective temporelle $\tau_{\textbf{moyen}}$ mais que ladite position centrale effective temporelle $\tau_{\textbf{moyen}}$ ne correspond pas à la position de synchronisation temporelle, la matrice de covariance fréquentielle $\mathbf{M_{1f}}$ exprimant la variation du canal le long de l'axe fréquentiel est une matrice dont les vecteurs propres sont complexes. Le procédé selon l'invention permet de définir, à partir du même profil temporel mais centré autour de la position de synchronisation temporelle, par exemple par transformation de Fourier du profil temporel du canal, une matrice de covariance fréquentielle intermédiaire $\mathbf{M_{2f}}$, qui correspond à la matrice de covariance fréquentielle $\mathbf{M_{1f}}$ du canal réel mais qui a des vecteurs propres réels. En d'autres termes, la matrice de covariance fréquentielle intermédiaire $\mathbf{M_{2f}}$ correspond à la contrainte due au profil temporel du canal mais avec un décalage temporel tel que la contrainte en terme de profil temporel du canal soit symétrique et centrée non pas sur la position centrale effective temporelle $\tau_{\textbf{moyen}}$ mais sur la position de synchronisation temporelle. La contrainte de profil temporel du canal est alors centrée et symétrique autour de la position de synchronisation temporelle. En outre, dans le cas particulier où la position centrale effective temporelle $\tau_{\textbf{moyen}}$ correspond à la position de synchronisation temporelle, alors $\mathbf{M_{2f}} = \mathbf{M_{1f}}$.

De même, lorsque le profil fréquentiel du canal est symétrique autour de la position centrale effective fréquentielle $\mathbf{f_{moyen}}$ mais que ladite position centrale effective fréquentielle $\mathbf{f_{moyen}}$ ne correspond pas à la position de synchronisation fréquentielle, la matrice de covariance temporelle $\mathbf{M_{1t}}$ exprimant la variation du canal le long de l'axe temporel est une matrice dont les vecteurs propres sont complexes. Le procédé selon l'invention permet de définir, à partir du même profil fréquentiel mais centré maintenant autour de la position de synchronisation fréquentielle, par exemple par transformation de Fourier inverse du profil fréquentiel du canal, une matrice de covariance temporelle intermédiaire $\mathbf{M_{2t}}$, qui correspond à la matrice de covariance temporelle $\mathbf{M_{1t}}$ du canal réel mais qui a des vecteurs propres réels. En d'autres termes, la matrice de covariance temporelle intermédiaire $\mathbf{M_{2t}}$ correspond à la contrainte due au profil fréquentiel du canal mais avec un décalage fréquentiel tel que la contrainte en terme de profil fréquentiel du canal soit symétrique et centrée non pas sur la position centrale effective fréquentielle $\mathbf{f_{moyen}}$ mais sur la position de synchronisation fréquentielle. La contrainte en terme de profil fréquentiel du canal est alors centrée et symétrique autour de la position de synchronisation fréquentielle. En outre, dans le cas particulier où la position centrale effective fréquentielle $\mathbf{f_{moyen}}$ correspond à la position de synchronisation fréquentielle, alors $\mathbf{M_{2t}} = \mathbf{M_{1t}}$

La matrice de covariance intermédiaire globale $\mathbf{M_2}$ qui est le produit de Kronecker de la matrice de covariance temporelle intermédiaire $\mathbf{M_{2t}}$ et de la matrice de covariance fréquentielle intermédiaire $\mathbf{M_{2f}}$ correspond ainsi à un canal virtuel de propagation $\mathbf{C'}$ et possède avantageusement des vecteurs propres réels. On peut utiliser, pour estimer le canal $\mathbf{C'}$ correspondant à cette matrice intermédiaire $\mathbf{M_2}$, une méthode basée sur le critère du maximum a posteriori (MAP) telle que, par exemple, la méthode décrite dans le document FR2983666 A1 ou bien dans le document FR2814011. Le vecteur colonne $\mathbf{C}$ correspondant au canal réel est ensuite avantageusement obtenu à partir de la matrice de canal intermédiaire $\mathbf{C'}$ et de la matrice de centrage $\mathbf{T}$ définie selon l'invention.

L'exploitation de la séparabilité de la matrice de covariance intermédiaire $\mathbf{M_2}$, dont les vecteurs propres sont réels, est très favorable en termes de complexité. Ainsi, pour une trame de **n** symboles, avec $\mathbf{N_f}$ sous-porteuses et $\mathbf{N_t}$

temps-symboles, la matrice de covariance intermédiaire $M_2$ est de dimension $(n,n)$ avec $n = N_f \times N_t$. Cette matrice est égale au produit de Kronecker d'une matrice de covariance $M_{2t}$ de dimension $(N_f, N_f)$ avec une matrice de covariance $M_{2f}$ de dimension $(N_t, N_t)$. Il suffit donc de mémoriser $(N_f^2 + N_t^2)$ valeurs au lieu de $(N_f^2 \times N_t^2)$ valeurs. Le procédé de la présente invention permet ainsi de réduire de manière significative la complexité de l'estimation de canal, particulièrement en termes de mémoire de stockage nécessaire, en tenant compte des contraintes physiques réelles du canal de propagation.

De préférence, sur la diagonale de la matrice **E,** les symboles émis sont concaténés de façon à ce que, pour le premier symbole de la trame, on place d'abord les symboles correspondant aux sous-porteuses successives, puis on fait de même pour le deuxième symbole de la trame, et ainsi de suite jusqu'au dernier symbole de la trame.

Selon un aspect de l'invention, le procédé comprend une étape préliminaire de détermination de la position de synchronisation temporelle et de la position de synchronisation fréquentielle du signal.

Selon un autre aspect de l'invention, le procédé comprend une étape de détermination de la position centrale effective temporelle $\tau_{moyen}$ et de la position centrale effective fréquentielle $f_{moyen}$ du signal.

De préférence, l'étape de calcul du vecteur canal intermédiaire **C'** comprend les sous-étapes de :

- décomposition des matrices $M_{2f}$ et $M_{2t}$ de covariance en vecteurs propres selon les relations $M_{2f} = W_F{}^H N_F W_F$ et $M_{2t} = W_T{}^H N_T W_T$, dans lesquelles :

  - $W_F$ est une matrice de vecteurs propres de la matrice $M_{2f}$ ;
  - $N_F$ est une matrice diagonale comprenant des valeurs propres associées aux vecteurs propres de la matrice $M_{2f}$ ;
  - $W_T$ est une matrice de vecteurs propres de la matrice $M_{2t}$ ;
  - $N_T$ est une matrice diagonale comprenant des valeurs propres associées aux vecteurs propres de la matrice $M_{2t}$ ;

- calcul du produit de Kronecker des matrices de vecteurs propres $W_F$ et $W_T$ pour obtenir une matrice de vecteurs propres globale **W** ;
- calcul d'une matrice diagonale de valeurs propres globale **N** égale au produit de Kronecker des matrices de valeurs propres $N_F$ et $N_T$; et
- calcul du vecteur canal intermédiaire **C'** à l'aide des symboles pilotes donnés par la matrice **E'** et des matrices de vecteurs propres **W** et de valeurs propres **N** en utilisant le critère du maximum a posteriori.

On entend par symbole pilote tout symbole connu du récepteur, c'est-à-dire à la fois les symboles pilotes, tels que désignés dans les normes des systèmes multiporteuses connus comme LTE et TEDS, et/ou les symboles de synchronisation et/ou les symboles déjà démodulés et décidés par le récepteur dans une étape antérieure de traitement.

La matrice **W** des vecteurs propres étant le produit de Kronecker des deux matrices $W_F$ et $W_T$ de vecteurs propres, il suffit de seulement $(N_f \times N_f + N_t \times N_t) = N_f^2 + N_t^2$ valeurs pour la représenter. De même, la matrice diagonale **N** des valeurs propres étant le produit de Kronecker des deux matrices diagonales $N_F$ et $N_T$, il suffit seulement de $N_f + N_t$ valeurs pour la représenter. Cela permet de réduire de manière significative la complexité de l'estimation de canal, particulièrement en termes de mémoire de stockage nécessaire.

Selon une réalisation, l'étape de calcul du vecteur canal intermédiaire **C'** comprend les sous-étapes de :

- calcul d'une matrice **P** selon la relation $\mathbf{P} = \sqrt{\mathbf{N}}.\mathbf{W}.\mathbf{E'}^H.\mathbf{E'}.\mathbf{W}^H.\sqrt{\mathbf{N}}$ ;
- décomposition de la matrice **P** en vecteurs propres selon la relation $\mathbf{P} = \mathbf{X}^H\mathbf{QX}$ dans laquelle **X** est une matrice de vecteurs propres de la matrice **P** et **Q** est une matrice diagonale comprenant des valeurs propres associées aux vecteurs propres de la matrice **P** ; et

- calcul du vecteur **C'** selon la relation $\mathbf{C'} = \mathbf{W}^H.\sqrt{\mathbf{N}}.\mathbf{X}^H.\left(\mathbf{Q}+\sigma^2.\mathbf{I}\right)^{-1}.\mathbf{X}.\sqrt{\mathbf{N}}.\mathbf{W}.\mathbf{E'}^H.\mathbf{R}$ dans laquelle **I** est la matrice identité, **R** est un vecteur comprenant les symboles reçus et $\sigma^2$ représente la puissance du bruit dans le canal.

Plus précisément, la matrice $\sqrt{\mathbf{N}}$ est une matrice diagonale dont les termes de la diagonale sont les racines carrées des termes de la diagonale de la matrice diagonale **N.**

Lorsque les symboles pilotes sont régulièrement répartis en temps et en fréquence, la matrice **P** peut être écrite sous la forme d'un produit de Kronecker de deux matrices relatives respectivement au domaine fréquentiel et au domaine temporel. Dans ce cas, la complexité de l'estimation de canal est encore réduite.

Selon une réalisation préférée, l'étape de calcul de la matrice **C'** comprend les sous étapes de :

- extraction d'une matrice **W'** à partir de la matrice **W** et d'une matrice **N'** à partir de la matrice **N**, la matrice **N'** comprenant un nombre déterminé n' de valeurs propres de la matrice **N** et la matrice **W'** comprenant les vecteurs propres associés à ces n' valeurs propres; et

- calcul de la matrice **C**' à l'aide des symboles pilotes et des matrices de vecteurs propres **W**' et de valeurs propres **N'** en utilisant le critère du maximum a posteriori.

De préférence, les n' valeurs propres sont les plus grandes valeurs propres de la matrice **N**.

Cela permet de réduire la complexité de l'estimation du canal tout en minimisant la perte de performances grâce au fait que les vecteurs propres conservés dans la matrice **W**' représentent la plus large part de l'énergie, représentée par la somme des valeurs propres conservées dans la matrice **N'.**

Avantageusement, les n' vecteurs propres de la matrice **W**' sont les produits de Kronecker d'un nombre limité $n'_f$ de vecteurs propres de la matrice $\mathbf{W}_F$ et d'un nombre limité $n'_t$ de vecteurs propres de la matrice $\mathbf{W}_T$ et les **n'** valeurs propres de la matrice **N'** sont les produits des valeurs propres de la matrice $\mathbf{N}_F$ correspondant aux $n'_f$ vecteurs propres de la matrice $\mathbf{W}_F$ et des valeurs propres de la matrice $\mathbf{N}_T$ correspondant aux $n'_t$ vecteurs propres de la matrice $\mathbf{W}_T$.

Dans ce cas, la matrice **W**' est séparable en temps et en fréquence. Il suffit alors de ($n'_f \times N_f + n'_t \times N_t$) valeurs pour la représenter. Ainsi, la complexité du procédé est encore plus réduite.

De préférence, **n'** est inférieur ou égal au nombre de symboles pilotes dans chaque trame.

Avantageusement, l'étape de calcul de la matrice **C**' comprend les sous-étapes de :

- calcul d'une matrice **P**' selon la relation $\mathbf{P}' = \sqrt{\mathbf{N}'}.\mathbf{W}'.\mathbf{E}'^{H}.\mathbf{E}'.\mathbf{W}'^{H}.\sqrt{\mathbf{N}'}$ ;

- décomposition de la matrice **P**' en vecteurs propres selon la relation **P' = X'**$^H$**Q'X'** dans laquelle **X**' est une matrice de vecteurs propres de la matrice **P**' et **Q**' est une matrice diagonale comprenant des valeurs propres associées aux vecteurs propres de la matrice **P**' ; et

- calcul de la matrice **C**' selon la relation $\mathbf{C}' = \mathbf{W}'^{H}.\sqrt{\mathbf{N}'}.\mathbf{X}'^{H}.\left(\mathbf{Q}' + \sigma^2.\mathbf{I}\right)^{-1}.\mathbf{X}'.\sqrt{\mathbf{N}'}.\mathbf{W}'.\mathbf{E}'^{H}.\mathbf{R}$ dans laquelle **I** est la matrice identité, **R** est un vecteur comprenant les symboles reçus et $\sigma^2$ représente la puissance du bruit dans le canal.

Plus précisément, la matrice $\sqrt{\mathbf{N}'}$ est une matrice diagonale dont les termes de la diagonale sont les racines carrées des termes de la diagonale de la matrice diagonale **N**'.

Lorsque les symboles pilotes sont régulièrement répartis en temps et en fréquence, la matrice **P**' peut être écrite sous la forme d'un produit de Kronecker de deux matrices relatives respectivement au domaine fréquentiel et au domaine temporel. Dans ce cas, la complexité de l'estimation de canal est encore réduite.

Avantageusement, le signal est un signal multiporteuses, notamment un signal OFDM.

L'invention peut également s'appliquer à des systèmes monoporteuse. Dans ce cas, on a alors **M$_{2f}$ = M$_{1f}$ = [1]**, où **[1]** représente la matrice identité de dimension (1,1), cette matrice est dégénérée en un scalaire égale à 1.

L'invention concerne aussi un équipement récepteur apte à recevoir d'un émetteur au moins un signal transmis à travers un canal de propagation radioélectrique, ledit signal comprenant des trames utilisant chacune **N$_f$** sous-porteuses fréquentielles sur chacune desquelles sont émis **N$_t$** symboles, où parmi l'ensemble des symboles, certains symboles, dits symboles pilotes, sont connus dudit équipement récepteur, le signal étant synchronisé par le récepteur à partir d'une position de synchronisation temporelle et d'une position de synchronisation fréquentielle, le profil temporel du canal étant symétrique et centré autour d'une position centrale effective temporelle $\tau_{\mathbf{moyen}}$ distincte de la position de synchronisation temporelle, le profil fréquentiel du canal étant symétrique et centré autour d'une position centrale effective fréquentielle **f$_{moyen}$** distincte de la position de synchronisation fréquentielle. Le procédé, mis en oeuvre dans le récepteur, est remarquable par le fait qu'il comprend :

- des moyens de détermination d'une matrice de covariance fréquentielle intermédiaire **M$_{2f}$** représentant les variations fréquentielles du canal, dues à un profil temporel théorique du canal, symétrique et centré sur la position de synchronisation temporelle, ce profil temporel théorique du canal étant obtenu à partir du profil temporel du canal translaté en temps de (-$\tau_{\mathbf{moyen}}$) de façon à être symétrique autour de la position de synchronisation temporelle ;
- des moyens de détermination d'une matrice de covariance temporelle intermédiaire **M$_{2t}$** représentant les variations temporelles du canal dues à un profil fréquentiel théorique du canal, symétrique et centré sur la position de synchronisation fréquentielle, ce profil fréquentiel théorique du canal étant obtenu à partir du profil fréquentiel du canal translaté en fréquence de (-f$_{\mathbf{moyen}}$) de façon à être symétrique autour de la position de synchronisation fréquentielle ;
- des moyens de calcul d'une matrice de covariance globale intermédiaire **M$_2$** selon le produit de Kronecker: $M_2 = M_{2t} \otimes M_{2f}$ ;
- des moyens de calcul d'une matrice **E**' selon la relation $E' = E.T^H$ , où $T = T_t \otimes T_f$ et dans laquelle **E** est une matrice diagonale comprenant les symboles pilotes émis dans une trame aux positions des symboles pilotes, les autres symboles étant nuls, $T_f$ est une matrice diagonale ($\mathbf{N_f}$, $\mathbf{N_f}$) de centrage définie par

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$ où $\varphi = 2\pi.\dfrac{\tau_{moyen}}{N_f}$ et $T_t$ est une matrice diagonale ($\mathbf{N_t}$, $\mathbf{N_t}$) de centrage

définie par $$T_t = \begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$ où $\psi = -2\pi.\dfrac{f_{moyen}}{N_t}$ ;

- des moyens de calcul d'un vecteur colonne représentant un canal intermédiaire **C'** qui minimise la relation

$$\frac{\|R-E'.C'\|^2}{\sigma^2} + \mathbf{C'^H}.\mathbf{M_2^{-1}}.\mathbf{C'}$$ où **R** est un vecteur colonne de dimension ($\mathbf{N_t x N_f}$) constitué des symboles reçus, et ;

- des moyens d'estimation du canal de propagation selon la relation $C = T^H.C'$, à partir du vecteur C' calculé.

L'invention concerne aussi un programme d'ordinateur comportant des instructions pour la mise en oeuvre du procédé de l'invention lorsque le programme est exécuté par au moins un processeur.

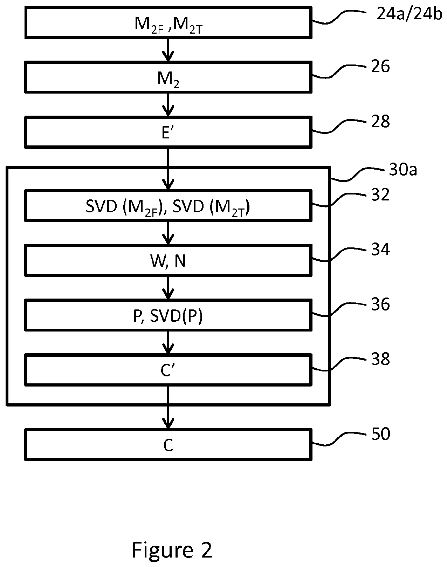

Les organigrammes des figures 2 à 3 illustrent schématiquement le déroulement de ce programme d'ordinateur, pour des modes de réalisation préférés de l'invention.

## DESCRIPTION DES FIGURES

Des modes de réalisation de l'invention vont maintenant être décrits de façon plus précise mais non limitative en regard des dessins annexés sur lesquels :

- la figure 1 est un schéma d'un équipement récepteur selon l'invention ;
- la figure 2 est un organigramme illustrant le fonctionnement du procédé d'estimation de canal selon un premier mode de mise en oeuvre de l'invention ; et
- la figure 3 est un organigramme illustrant le fonctionnement du procédé d'estimation de canal selon un deuxième mode mise en oeuvre de l'invention.

## DESCRIPTION DETAILLEE DE L'INVENTION

### I. Equipement récepteur 2

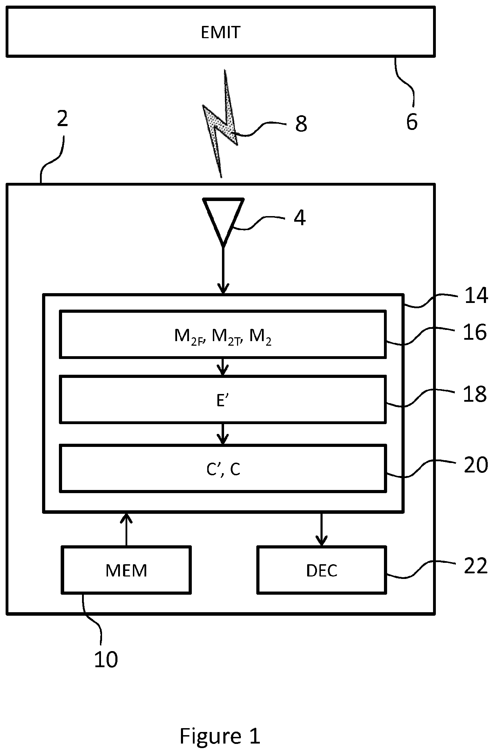

La figure 1 représente un équipement récepteur 2 d'un système de transmission multiporteuses, comme par exemple un terminal mobile d'un système radio mobile professionnel PMR (« Professional Mobile Radio ») de type TEDS. Ceci n'est en aucun cas limitatif de la portée de la présente invention qui peut s'appliquer plus généralement à tout système de transmission multiporteuses voire à un système de transmission monoporteuse.

Le récepteur 2 comprend une antenne 4 pour la réception d'un signal OFDM transmis depuis un émetteur 6 à travers un canal de propagation radioélectrique 8.

Le signal OFDM émis par l'émetteur 6 est organisé en trames de symboles répartis en temps et en fréquence parmi lesquels certains symboles, dits symboles pilotes, sont connus du récepteur 2 et sont stockés dans une mémoire 10 dudit récepteur 2. Chaque trame comprend ainsi **n** symboles avec $\mathbf{N_f}$ sous-porteuses et $\mathbf{N_t}$ temps-symboles, **n** étant égal au produit de $\mathbf{N_f}$ et de $\mathbf{N_t}$.

Le récepteur 2 comprend un module d'estimation de canal 14 utilisant les symboles pilotes stockés dans la mémoire 10 et sa connaissance des contraintes physiques du canal 8 dans les domaines temporel et fréquentiel pour estimer le canal de propagation 8.

D'une part, dans le domaine fréquentiel, le profil fréquentiel du canal 8, dû aux réflexions sur des obstacles proches, a un étalement fréquentiel limité. Cet étalement fréquentiel, nommé étalement Doppler, est compris entre $-F_D$

$$F_D = \frac{v}{c}.F_p,$$

et $+F_D$, où $F_D$ est la fréquence Doppler maximale donnée par la relation dans laquelle v est la vitesse du récepteur 2 mobile, « c » est la vitesse de la lumière, et $F_p$ est la fréquence porteuse. Les composantes du spectre de fréquence du canal de propagation 8 sont donc comprises entre des limites fixes pour des conditions de vitesse maximale du récepteur 2 mobile et de fréquence porteuse données. Le profil fréquentiel du canal 8 est centré et symétrique autour d'une position centrale effective fréquentielle $f_{moyen}$ du canal 8 et définit une matrice de covariance temporelle $M_{1t}$.

D'autre part, le profil temporel du canal 8, dû aux réflexions sur les obstacles lointains, a un étalement temporel limité. Cet étalement temporel dépend de la bande de fréquences utilisée et de l'environnement. A titre d'exemples, à une fréquence porteuse de 400 MHz, en environnement urbain, l'étalement temporel est de l'ordre de 5 μs alors qu'en environnement montagneux, cet étalement est de l'ordre de 15 μs. Les composantes du profil temporel du canal 8 sont donc comprises entre des limites fixes pour des conditions d'environnement données. Le profil temporel du canal 8 est centré et symétrique autour d'une position centrale effective temporelle $\tau_{moyen}$ et définit une matrice de covariance fréquentielle $M_{1f}$ du canal 8.

Les caractéristiques du profil fréquentiel et du profil temporel du canal 8 sont connues du récepteur 2 et sont stockées dans la mémoire 10.

Le récepteur 2 est aussi configuré pour déterminer et/ou recevoir une position de synchronisation temporelle du signal et une position de synchronisation fréquentielle du signal. La position de synchronisation temporelle peut être prédéterminée de manière connue, par exemple, au moyen d'une séquence de synchronisation temporelle spécifique (ou par tout autre moyen). La position de synchronisation fréquentielle peut être prédéterminée de manière connue, par exemple, au moyen d'une séquence de synchronisation fréquentielle spécifique (ou par tout autre moyen).

Le récepteur 2 est aussi configuré pour déterminer une position centrale effective temporelle du signal correspondant au milieu de la fenêtre d'étalement du profil temporel du signal reçu et une position centrale effective fréquentielle du signal correspondant au milieu de la fenêtre d'étalement du profil fréquentiel du signal reçu.

II. Module d'estimation de canal 14

a) Moyens de détermination 16

Le module d'estimation de canal 14 comprend tout d'abord des moyens de détermination 16 configurés pour déterminer :

- la matrice de covariance fréquentielle intermédiaire $M_{2f}$ représentant les variations fréquentielles du canal dues au profil temporel du canal centré sur la position de synchronisation temporelle, et
- la matrice de covariance temporelle intermédiaire $M_{2t}$ représentant les variations temporelles du canal, dues au profil fréquentiel du canal centré sur la position de synchronisation fréquentielle.

La détermination de la matrice de covariance fréquentielle intermédiaire $M_{2f}$ peut être réalisée, par exemple, en appliquant une transformation de Fourier à la fenêtre d'étalement du profil temporel du signal centrée sur la position de synchronisation temporelle du signal.

De même, la détermination de la matrice de covariance temporelle intermédiaire $M_{2t}$ peut être réalisée, par exemple, en appliquant une transformation de Fourier inverse à la fenêtre d'étalement du profil fréquentiel du signal centrée sur la position de synchronisation fréquentielle du signal.

De plus, les moyens de détermination 16 sont configurés pour calculer une matrice de covariance globale intermédiaire $M_2$ selon le produit de Kronecker : $M_2 = M_{2t} \otimes M_{2f}$.

b) Moyens de calcul 18

Le module d'estimation de canal 14 comprend également des moyens de calcul 18 d'une matrice $E'$ selon la relation $E' = E.T^H$, où $T = T_t \otimes T_f$, dans laquelle $E$ est une matrice diagonale comprenant les symboles pilotes émis dans une trame aux positions des symboles pilotes, les autres symboles étant nuls, $T_f$ est une matrice diagonale ($N_f$, $N_f$) de

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$

centrage définie par $\qquad$ où $\qquad \varphi = 2\pi.\dfrac{\tau_{moyen}}{N_f}$ et $T_t$ est une matrice diagonale ($N_t$, $N_t$)

$$T_t = \begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$

de centrage définie par $\qquad$ où $\qquad \psi = -2\pi.\dfrac{f_{moyen}}{N_t}$.

c) Moyens d'estimation 20

Le module d'estimation de canal 14 comprend en outre des moyens d'estimation 20 du canal de propagation 8 configurés pour calculer un vecteur colonne **C'** qui minimise la relation $\dfrac{\|R - E'.C'\|^2}{\sigma^2} + C'^H.M_2^{-1}.C'$ où **R** est un vecteur colonne de dimension ($N_t$ x $N_f$) constitué des symboles reçus et estimer le canal selon la relation $C = T^H.C'$, à partir du vecteur **C'** calculé.

III. Décodeur 22

Le récepteur 2 comprend également un décodeur 22 fournissant une estimation des symboles émis à partir de l'estimation de canal effectuée par le module d'estimation de canal 14.

La structure du récepteur de l'invention ayant été décrite, le fonctionnement du procédé d'estimation de canal mis en oeuvre dans le module d'estimation de canal 14 va être détaillé.

IV. Mise en oeuvre

De manière générale, le signal reçu par le récepteur 2 s'écrit sous la forme **R = E.C + B** où **R** est un vecteur de dimension n constitué des symboles reçus, **C** est un vecteur de dimension n représentant le canal de propagation 8, **E** est une matrice diagonale de dimension (**n,n**) constituée des symboles émis dans une trame et **B** est un vecteur de dimension n représentant le bruit du canal 8.

On considère conventionnellement que le bruit du canal est un bruit Gaussien de variance, ou puissance, $\sigma^2$.

La probabilité de recevoir le vecteur **R** connaissant le vecteur canal **C** est alors égale à $e^{-\dfrac{\|R - EC\|^2}{2\sigma^2}}$.

En outre, pour un canal radiomobile terrestre variant selon une loi de Rayleigh, la probabilité du canal est égale à $e^{-\dfrac{C^H.M^{-1}.C}{2}}$ où **M₁** est la matrice de covariance globale représentant les contraintes physiques réelles en temps en en fréquence du canal 8 et où la notation **X**^H indique qu'il s'agit d'une matrice **X** conjuguée et transposée.

En ce qui concerne le choix de $\sigma^2$ et de **M₁**, il faut noter que l'on peut prendre pour **M₁** la matrice de covariance du canal normalisée, c'est-à-dire le canal de puissance moyenne unitaire. Dans ce cas, $\sigma^2$ représente alors l'inverse du rapport signal sur bruit. Il est possible de se fixer une valeur de rapport signal sur bruit cible, cette valeur ne changeant pas quelle que soit la valeur effective de la puissance de bruit et de la puissance de signal utile. D'autres solutions sont possibles comme, par exemple, d'estimer le rapport signal sur bruit au fur et à mesure de la réception et de la démodulation des informations reçues, par exemple sur les symboles pilotes qui sont connus de l'émetteur et du récepteur. Dans ce cas, il est possible d'adapter dynamiquement le rapport signal sur bruit dans le processus d'estimation du canal.

Le procédé selon l'invention met en oeuvre le critère du maximum a posteriori ou MAP. La résolution du problème d'estimation du canal au sens du MAP revient à maximiser la probabilité qu'un canal intermédiaire virtuel soit égal à un vecteur canal intermédiaire **C',** connaissant le vecteur **R,** tout en répondant à ses contraintes physiques exprimées dans une matrice de covariance intermédiaire globale notée **M₂** symétrique et centrée sur une position de synchronisation temporelle et sur une position de synchronisation fréquentielle.

Cela revient à maximiser la probabilité $e^{\frac{\|R-E'C\|^2}{2\sigma^2}} \cdot e^{\frac{C'^H.M_2^{-1}.C'}{2}}$ ' ce qui revient à minimiser l'opposé du logarithme de cette expression égal à $\frac{\|R - E'C'\|^2}{\sigma^2} + C'^H.M_2^{-1}.C'$.

La solution **C'** est donc celle pour laquelle l'expression suivante, notée [1], obtenue en annulant le gradient par rapport à **C'** de l'expression précédente, est vérifiée :

$$\left(E'^H.E' + \sigma^2.M_2^{-1}\right)C' = E'^H.R \qquad\qquad [1].$$

Seuls les symboles pilotes étant connus du récepteur 2, des zéros sont placés dans la matrice **E'** aux emplacements des autres symboles inconnus du récepteur.

Or, les contraintes du canal 8 dans le domaine temporel sont indépendantes de ses contraintes dans le domaine fréquentiel. La matrice de covariance **M₂** du canal est donc séparable en temps et en fréquence en l'exprimant comme le produit de Kronecker de deux matrices de covariance **M₂f** et **M₂t**, la matrice **M₂f** exprimant les contraintes du canal dans le domaine fréquentiel et la matrice **M₂t** exprimant les contraintes du canal dans le domaine temporel.

Ainsi, dans une étape 24a/24b, les matrices **M₂f** et **M₂t** de covariance du canal 8, respectivement dans le domaine fréquentiel et dans le domaine temporel, sont déterminées par les moyens de détermination 16 en utilisant respectivement la fenêtre d'étalement du profil temporel et la fenêtre d'étalement du profil fréquentiel du canal 8 stockées dans la mémoire 10. Ces matrices **M₂f** et **M₂t** sont stockées dans la mémoire 10.

Selon l'invention, la matrice de covariance intermédiaire **M₂** est déterminée par les moyens de détermination 16 dans une étape 26 selon le produit de Kronecker : $M_2 = M_{2t} \otimes M_{2f}$.

Une matrice **E'** est ensuite calculée par les moyens de calcul 18 dans une étape 28 selon la relation $E' = E.T^H$, où $T = T_t \otimes T_f$ et dans laquelle **E** est une matrice diagonale comprenant les symboles pilotes émis dans une trame aux positions des symboles pilotes, les autres symboles étant nuls.

Le vecteur colonne **C'** qui minimise la relation $\frac{\|R - E'.C'\|^2}{\sigma^2} + C'^H.M_2^{-1}.C'$, est ensuite calculé par les moyens d'estimation 20 dans une étape 30a/30b en mettant en oeuvre le critère du maximum a posteriori ou MAP afin d'estimer le canal de propagation 8 selon la relation $C = T^H.C'$.

L'étape 30a/30b de calcul du vecteur **C'** est décrite ci-après dans un premier mode de mise en oeuvre 30a (étapes 32 à 38) et dans un deuxième mode de mise en oeuvre 30b (étapes 32 à 34 et 40 à 44) du procédé selon l'invention.

a) Premier mode de mise en oeuvre

L'organigramme de la figure 2 illustre un premier mode de mise en oeuvre du procédé d'estimation de canal de l'invention mettant en oeuvre le critère du MAP.

Dans une étape 32, les matrices **M₂f** et **M₂t** de covariance sont décomposées en vecteurs propres et en valeurs propres par les moyens de décomposition 18 selon les relations $M_F = W_F^H N_F W_F$, et $M_T = W_T^H N_T W_T$, dans lesquelles :

- **W_F** est une matrice de vecteurs propres de la matrice **M₂f** ;
- **N_F** est une matrice diagonale comprenant des valeurs propres associées aux vecteurs propres de la matrice **M₂f** ;
- **W_T** est une matrice de vecteurs propres de la matrice **M₂t**; et
- **N_T** est une matrice diagonale comprenant des valeurs propres associées aux vecteurs propres de la matrice **M₂t**.

A l'étape 34, les moyens de décomposition 18 calculent le produit de Kronecker des matrices de vecteurs propres **W_F** et **W_T** pour obtenir une matrice de vecteurs propres globale **W** de dimension (**n, n**). Ils calculent également une matrice diagonale de valeurs propres globale **N** de dimension (**n, n**) contenant les produits des valeurs propres des matrices **N_F** et **N_T**. Les matrices **W_F**, **N_F**, **W_T** et **N_T** sont également stockées dans la mémoire 10.

La matrice de covariance intermédiaire globale **M₂** du canal 8 est alors égale à $M_2 = W^H N W$. L'expression [1]

peut donc s'écrire : $(\mathbf{E'}^{H}\mathbf{E'}+\sigma^2.\mathbf{W}^{H}.\mathbf{N}^{-1}.\mathbf{W}).\mathbf{C'}=\mathbf{E'}^{H}.\mathbf{R}$.

En posant $\mathbf{C'} = \mathbf{W}^{H}.\sqrt{\mathbf{N}}.\mathbf{b}$ où **b** est un vecteur de dimension n, et où $\sqrt{\mathbf{N}}$ est une matrice diagonale dont chaque terme de la diagonale est la racine carrée du terme correspondant de la diagonale de la matrice diagonale **N** , l'expression [1] s'écrit :

$$\left(\sqrt{\mathbf{N}}.\mathbf{W}.\mathbf{E'}^{H}.\mathbf{E'}.\mathbf{W}^{H}.\sqrt{\mathbf{N}}+\sigma^2.\mathbf{I}\right)\mathbf{b} = \sqrt{\mathbf{N}}.\mathbf{W}.\mathbf{E'}^{H}.\mathbf{R} \qquad [2]$$

où **I** est la matrice identité.

A l'étape 36, les moyens d'estimation de canal 20 calculent la matrice $\mathbf{P} = \sqrt{\mathbf{N}}.\mathbf{W}.\mathbf{E'}^{H}.\mathbf{E'}.\mathbf{W}^{H}.\sqrt{\mathbf{N}}$ et décomposent cette matrice **P** en vecteurs propres et valeurs propres selon la relation $\mathbf{P} = \mathbf{X}^{H}\mathbf{Q}\mathbf{X}$ dans laquelle **X** est une matrice de vecteurs propres de la matrice **P** et **Q** est une matrice diagonale comprenant des valeurs propres associées aux vecteurs propres de la matrice **P.**

A l'étape 38, les moyens d'estimation de canal 20 estiment le canal 8 à partir de la relation 2 selon l'expression [3] suivante :

$$\mathbf{C'} = \mathbf{W}^{H}.\sqrt{\mathbf{N}}.\mathbf{X}^{H}.\left(\mathbf{Q}+\sigma^2.\mathbf{I}\right)^{-1}.\mathbf{X}.\sqrt{\mathbf{N}}.\mathbf{W}.\mathbf{E'}^{H}.\mathbf{R} \qquad [3].$$

a) Deuxième mode de mise en oeuvre

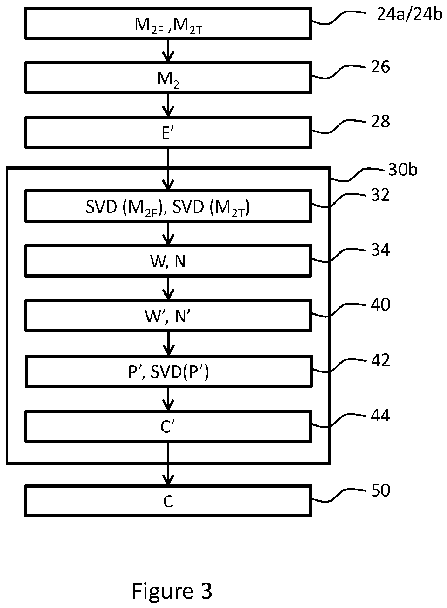

L'organigramme de la figure 3 illustre un deuxième mode de mise en oeuvre du procédé d'estimation de canal de l'invention mettant également en oeuvre le critère MAP. Sur cette figure, les étapes 24, 26, 28 et 30 à 34 sont identiques à celles de la figure 2. La description de ces étapes n'est donc pas répétée.

A l'étape 40, les moyens d'estimation de canal 20 extraient une matrice diagonale **N'** à partir de la matrice **N,** la matrice **N'** comprenant un nombre déterminé n' des valeurs propres les plus grandes de **N** et déterminent une matrice **W'** comprenant les vecteurs propres associés à ces n' valeurs propres les plus grandes. Les matrices **N'** et **W'** sont stockées dans la mémoire 10.

Généralement, les valeurs propres de la matrice **N** décroissent rapidement. Ainsi, la somme des valeurs propres conservées dans la matrice **N'** représente une large part de l'énergie du canal 8. La matrice **W'** comprend ainsi les vecteurs propres les plus représentatifs pour exprimer les contraintes du canal.

L'expression [1] peut donc s'écrire : $(\mathbf{E'}^{H}\mathbf{E'}+\sigma^2.\mathbf{W'}^{H}.\mathbf{N'}^{-1}.\mathbf{W'})\mathbf{C'}= \mathbf{E'}^{H}.\mathbf{R}$.

En posant $\mathbf{C'} = \mathbf{W'}^{H}.\sqrt{\mathbf{N'}}.\mathbf{b}$ où **b** est un vecteur de dimension n', l'expression [1] s'écrit

$$\left(\sqrt{\mathbf{N'}}.\mathbf{W'}.\mathbf{E'}^{H}.\mathbf{E'}.\mathbf{W'}^{H}.\sqrt{\mathbf{N'}}+\sigma^2.\mathbf{I}\right)\mathbf{b} = \sqrt{\mathbf{N'}}.\mathbf{W'}.\mathbf{E'}^{H}.\mathbf{R} \qquad [4]$$

où **I** est la matrice identité.

A l'étape 42, les moyens d'estimation de canal 20 calculent une matrice **P'** selon la relation $\mathbf{P'} = \sqrt{\mathbf{N'}}.\mathbf{W'}.\mathbf{E'}^{H}.\mathbf{E'}.\mathbf{W'}^{H}.\sqrt{\mathbf{N'}}$ et décomposent cette matrice **P'** en vecteurs propres et valeurs propres selon la relation $\mathbf{P'}=\mathbf{X'}^{H}\mathbf{Q}\mathbf{X'}$ dans laquelle **X'** est une matrice de vecteurs propres de la matrice **P'** et **Q'** est une matrice diagonale comprenant des valeurs propres associées aux vecteurs propres de la matrice **P'.**

A l'étape 44, les moyens d'estimation de canal 20 estiment le canal 8 à partir de la relation [4] selon l'expression [5] suivante

$$\mathbf{C'} = \mathbf{W'}^{H}.\sqrt{\mathbf{N'}}.\mathbf{X'}^{H}.\left(\mathbf{Q'}+\sigma^2.\mathbf{I}\right)^{-1}.\mathbf{X'}.\sqrt{\mathbf{N'}}.\mathbf{W'}.\mathbf{E'}^{H}.\mathbf{R} \qquad [5].$$

La matrice **W'étant** de dimension (**n',n'**) et la matrice **N'** étant de dimension (**n',n'**), ce mode de réalisation permet des calculs moins complexes que le premier mode de réalisation.

Dans une réalisation préférée, les **n'** vecteurs propres de la matrice **W'** sont les produits de Kronecker d'un nombre limité $\mathbf{n'_f}$ de vecteurs propres de la matrice $\mathbf{W}_F$ et d'un nombre limité $\mathbf{n'_t}$ de vecteurs propres de la matrice $\mathbf{W}_T$ et les **n'** valeurs propres de la matrice **N'** sont les produits des valeurs propres de la matrice $\mathbf{N}_F$ correspondant aux $\mathbf{n'_f}$

vecteurs propres de la matrice $\mathbf{W_F}$ et des valeurs propres de la matrice $\mathbf{N}_T$ correspondant aux $\mathbf{n'_t}$ vecteurs propres de la matrice $\mathbf{W}_T$. Dans ce cas, la matrice $\mathbf{W'}$ est séparable en temps et en fréquence. On peut alors la mémoriser sous la forme du produit de Kronecker de deux matrices et elle correspond alors à une dimension totale de $[(\mathbf{n'_f}, \mathbf{n_f}) + (\mathbf{n'_t}, \mathbf{n_t})]$, ce qui permet de réduire la complexité du procédé.

Dans les deux modes de mises en oeuvre décrits ci-avant, la matrice du canal réel $\mathbf{C}$ est ensuite estimée selon l'invention dans une étape 50 selon la relation $\mathbf{C} = \mathbf{T}^H. \mathbf{C'}$ à partir du vecteur $\mathbf{C'}$ calculé.

Bien entendu, d'autres modes de réalisation peuvent encore être envisagés.

Plus particulièrement, le calcul des matrices de covariance peut être réalisé de manière dynamique afin de prendre en compte les variations des contraintes du canal.


**Revendications**

1.  Procédé d'estimation d'un canal de propagation radioélectrique (8) entre un émetteur (6) et un récepteur (2), ledit émetteur (6) émettant un signal comprenant des trames utilisant chacune $\mathbf{N_f}$ sous-porteuses fréquentielles sur chacune desquelles sont émis $\mathbf{N_t}$ symboles, où parmi l'ensemble des symboles, certains symboles, dits symboles pilotes, sont connus dudit récepteur (2), ledit signal étant synchronisé par le récepteur (2) à partir d'une position de synchronisation temporelle et d'une position de synchronisation fréquentielle, le profil temporel du canal (8) étant symétrique et centré autour d'une position centrale effective temporelle $\tau_{\mathbf{moyen}}$ distincte de la position de synchronisation temporelle, le profil fréquentiel du canal (8) étant symétrique et centré autour d'une position centrale effective fréquentielle $\mathbf{f_{moyen}}$ distincte de la position de synchronisation fréquentielle, le procédé, mis en oeuvre par le récepteur (2), étant **caractérisé par le fait qu'**il comprend les étapes de :

    - détermination (24a) d'une matrice de covariance fréquentielle intermédiaire $\mathbf{M_{2f}}$ représentant les variations fréquentielles du canal (8) correspondant à un profil temporel théorique du canal (8), symétrique et centré sur la position de synchronisation temporelle, ce profil temporel théorique du canal étant obtenu à partir du profil temporel du canal translaté en temps de $(-\tau_{\mathbf{moyen}})$ de façon à être symétrique

    autour de la position de synchronisation temporelle ;

    - détermination (24b) d'une matrice de covariance temporelle intermédiaire $\mathbf{M_{2t}}$ représentant les variations temporelles du canal (8) correspondant à un profil fréquentiel théorique du canal (8), symétrique et centré sur la position de synchronisation fréquentielle, ce profil fréquentiel théorique du canal étant obtenu à partir du profil fréquentiel du canal translaté en fréquence de $(-\mathbf{f_{moyen}})$ de façon à être symétrique autour de la position de synchronisation fréquentielle ;
    - calcul (26) d'une matrice de covariance globale intermédiaire $\mathbf{M2}$ selon le produit de Kronecker: $M_2 = M_{2t} \otimes M_{2f}$ ;
    - calcul (28) d'une matrice $\mathbf{E'}$ selon la relation $E' = E.T^H$, où $T = T_t \otimes T_f$ et dans laquelle $\mathbf{E}$ est une matrice diagonale comprenant les symboles pilotes émis dans une trame aux positions des symboles pilotes, les autres symboles étant nuls, $T_f$ est une matrice diagonale ($\mathbf{N_f}$, $\mathbf{N_t}$) de centrage définie par

$$T_f = \begin{bmatrix} 1 & 0 & . & . & 0 \\ 0 & e^{i\varphi} & . & & \\ . & . & e^{i2\varphi} & . & \\ . & & . & 0 & \\ 0 & . & . & 0 & e^{i(Nf-1)\varphi} \end{bmatrix}$$ où $\varphi = 2\pi. \dfrac{\tau_{moyen}}{N_f}$ et $T_t$ est une matrice diagonale ($\mathbf{N_t}$, $\mathbf{N_t}$) de

$$T_t = \begin{bmatrix} 1 & 0 & . & . & 0 \\ 0 & e^{i\psi} & . & & \\ . & . & e^{i2\psi} & . & \\ . & & . & 0 & \\ 0 & . & . & 0 & e^{i(Nt-1)\psi} \end{bmatrix}$$

centrage définie par                                                                                                    où

$$\psi = -2\pi . \frac{f_{\text{moyen}}}{N_t} \; ;$$

;

- calcul (30a ; 30b) d'un vecteur colonne représentant un canal intermédiaire **C'** qui minimise la relation

$$\frac{\|R - E'.C'\|^2}{\sigma^2} \; + \; \mathbf{C'}^{H}.\mathbf{M}_2^{-1}.\mathbf{C'}$$ où **R** est un vecteur colonne de dimension ($N_t$ x $N_f$) constitué des symboles reçus, ledit calcul comprenant les sous étapes de :

- décomposition (32) des matrices **M$_{2f}$** et **M$_{2t}$** de covariance en vecteurs propres selon les relations

$$M_{2f} = W_F^H N_F W_F$$

et $M_{2t} = W_T^H N_t W_T$, dans lesquelles :

- **W$_F$** est une matrice de vecteurs propres de la matrice **M$_{2f}$** ;
- **N$_F$** est une matrice diagonale comprenant des valeurs propres associées aux vecteurs propres de la matrice **M$_{2t}$** ;
- **W$_T$** est une matrice de vecteurs propres de la matrice **M$_{2t}$** ;
- **N$_T$** est une matrice diagonale comprenant des valeurs propres associées aux vecteurs propres de la matrice **M$_{2t}$** ;

- calcul (34) du produit de Kronecker des matrices de vecteurs propres **W$_F$** et **W$_T$** pour obtenir une matrice de vecteurs propres globale **W** ;
- calcul (34) d'une matrice diagonale de valeurs propres globale **N** égale au produit de Kronecker des matrices de valeurs propres **N$_F$** et **N$_T$**; et
- calcul du vecteur canal intermédiaire **C'** à l'aide des symboles pilotes et des matrices de vecteurs propres **W** et de valeurs propres **N** en utilisant le critère du maximum a posteriori ;

et ;
- estimation (50) du canal de propagation selon la relation $C = T^H.C'$, à partir du vecteur **C'** calculé.

2. Procédé selon la revendication 1, **caractérisé en ce que** l'étape de calcul du vecteur canal intermédiaire **C'** comprend les sous-étapes de :

- calcul (36) d'une matrice **P** selon la relation $\mathbf{P} = \sqrt{\mathbf{N}}.\mathbf{W}.\mathbf{E}^H.\mathbf{E}.\mathbf{W}^H.\sqrt{\mathbf{N}}$ dans laquelle **E** est une matrice diagonale comprenant les symboles pilotes aux positions des symboles pilotes, les autres éléments de la diagonale étant nuls ;
- décomposition (36) de la matrice **P** en vecteurs propres selon la relation **P** = **X**$^H$ **QX** dans laquelle **X** est une matrice de vecteurs propres de la matrice **P** et **Q** est une matrice diagonale comprenant des valeurs propres associées aux vecteurs propres de la matrice **P;** et
- calcul du vecteur canal intermédiaire **C'** selon la relation $\mathbf{C} = \mathbf{W}^H.\sqrt{\mathbf{N}}.\mathbf{X}^H.(\mathbf{Q} + \sigma^2.\mathbf{I})^{-1}.\mathbf{X}.\sqrt{\mathbf{N}}.\mathbf{W}.\mathbf{E}^H.\mathbf{R}$ dans laquelle **C** est un vecteur représentant le canal, **I** est la matrice identité, **R** est un vecteur comprenant les symboles reçus et $\sigma^2$ représente la puissance du bruit dans le canal.

3. Procédé selon la revendication 1, **caractérisé en ce que** l'étape de calcul de du vecteur canal intermédiaire **C'** comprend les sous étapes :

- d'extraction (40) d'une matrice **W'** à partir de la matrice **W** et d'une matrice **N'** à partir de la matrice **N,** la matrice **N'** comprenant un nombre déterminé n' de valeurs propres de la matrice **N** et la matrice **W'** comprenant les vecteurs propres associés à ces n' valeurs propres; et

- calcul du vecteur canal intermédiaire **C'** à l'aide des symboles pilotes et des matrices de vecteurs propres **W'** et de valeurs propres **N**' en utilisant le critère du maximum a posteriori.

4. Procédé selon la revendication 3, **caractérisé en ce que** les n' valeurs propres sont les plus grandes valeurs propres de la matrice N.

5. Procédé selon la revendication 3, dans lequel les n' vecteurs propres de la matrice **W'** sont les produits de Kronecker d'un nombre limité **n'$_t$** de vecteurs propres de la matrice **W$_F$** et d'un nombre limité **n'$_t$** de vecteurs propres de la matrice **W$_T$** et les **n'** valeurs propres de la matrice **N'** sont les produits des valeurs propres de la matrice **N$_F$** correspondant aux **n'$_f$** vecteurs propres de la matrice **W$_F$** et des valeurs propres de la matrice **N$_T$** correspondant au **n'$_t$** vecteurs propres de la matrice **W$_T$**.

6. Procédé selon l'une des revendications 3 à 5, dans lequel **n'** est inférieur ou 10 égal au nombre de symboles pilotes dans chaque trame.

7. Procédé selon l'une des revendications 3 à 6, dans lequel l'étape de calcul du vecteur canal intermédiaire **C'** comprend les sous-étapes de :

   - calcul (42) d'une matrice **P'** selon la relation $\mathbf{P'} = \sqrt{\mathbf{N'}}.\mathbf{W'}.\mathbf{E}^H.\mathbf{E}.\mathbf{W'}^H.\sqrt{\mathbf{N'}}$ dans laquelle **E** est une matrice diagonale comprenant les symboles pilotes aux positions des symboles pilotes, les autres éléments de la diagonale étant nuls ;
   - décomposition (42) de la matrice **P'** en vecteurs propres selon la relation **P'** = ***X'**$^H$**Q'X'*** dans laquelle **X'** est une matrice de vecteurs propres de la matrice **P'** et **Q'** est une matrice diagonale comprenant des valeurs propres associées aux vecteurs propres de la matrice **P'**; et
   - calcul du vecteur canal intermédiaire **C'** selon la relation

$$\mathbf{C} = \mathbf{W'}^H.\sqrt{\mathbf{N'}}.\mathbf{X'}^H.(\mathbf{Q'} + \sigma^2.\mathbf{I})^{-1}.\mathbf{X'}.\sqrt{\mathbf{N'}}.\mathbf{W'}.\mathbf{E}^H.\mathbf{R}$$

dans laquelle **C** est un vecteur représentant le canal, **I** est la matrice identité, **R** est un vecteur comprenant les symboles reçus et $\sigma^2$ représente la puissance du bruit dans le canal.

8. Procédé selon l'une des revendications précédentes, dans lequel le signal est un signal OFDM.

9. Equipement récepteur (2) apte à recevoir d'un émetteur (6) au moins un signal transmis à travers un canal de propagation radioélectrique (8), ledit signal comprenant des trames utilisant chacune **N$_f$** sous-porteuses fréquentielles sur chacune desquelles sont émis **N$_t$** symboles, où parmi l'ensemble des symboles, certains symboles, dits symboles pilotes, sont connus dudit équipement récepteur (2), le signal étant synchronisé par le récepteur (2) à partir d'une position de synchronisation temporelle et d'une position de synchronisation fréquentielle, le profil temporel du canal (8) étant symétrique et centré autour d'une position centrale effective temporelle $\tau_{\mathbf{moyen}}$ distincte de la position de synchronisation temporelle, le profil fréquentiel du canal (8) étant symétrique et centré autour d'une position centrale effective fréquentielle **f$_{moyen}$** distincte de la position de synchronisation fréquentielle, le procédé, mis en oeuvre dans le récepteur, est **caractérisé par le fait qu'**il comprend:

   - des moyens (16) de détermination d'une matrice de covariance fréquentielle intermédiaire **M$_{2f}$** représentant les variations fréquentielles du canal (8) correspondant à un profil temporel théorique du canal (8), symétrique et centré sur la position de synchronisation temporelle, ce profil temporel théorique du canal étant obtenu à partir du profil temporel du canal translaté en temps de (-$\tau_{\mathbf{moyen}}$) de façon à être symétrique autour de la position de synchronisation temporelle ;
   - des moyens (16) de détermination d'une matrice de covariance temporelle intermédiaire **M$_{2t}$** représentant les variations temporelles du canal (8) correspondant à un profil fréquentiel théorique du canal (8), symétrique et centré sur la position de synchronisation fréquentielle, ce profil fréquentiel théorique du canal étant obtenu à partir du profil fréquentiel du canal translaté en fréquence de (-**f$_{moyen}$**) de façon à être symétrique autour de la position de synchronisation fréquentielle ;
   - des moyens (16) de calcul d'une matrice de covariance globale intermédiaire **M$_2$** selon le produit de Kronecker: $M_2 = M_{2t} \otimes M_{2f}$;

- des moyens (18) de calcul d'une matrice E' selon la relation $E' = E.T^H$, où $T = T_t \otimes T_f$ et dans laquelle **E** est une matrice diagonale comprenant les symboles pilotes émis dans une trame aux positions des symboles pilotes, les autres symboles étant nuls, $T_f$ est une matrice diagonale ($\mathbf{N_f}$, $\mathbf{N_f}$) de centrage définie par

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$ où $\varphi = 2\pi . \dfrac{\tau_{moyen}}{N_f}$ et $T_t$ est une matrice diagonale ($\mathbf{N_t}$, $\mathbf{N_t}$) de

centrage définie par $$T_t = \begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$ où

$$\psi = -2\pi . \frac{\mathrm{f}_{moyen}}{N_t} \; ;$$

- des moyens (20) de calcul d'un vecteur colonne représentant un canal intermédiaire **C'** qui minimise la relation

$$\frac{\|R - E'.C'\|^2}{\sigma^2} + \mathbf{C'^H.M_2^{-1}.C'}$$ où **R** est un vecteur colonne de dimension ($\mathbf{N_t}$ x $\mathbf{N_f}$) constitué des symboles reçus, ledit calcul comprenant les sous étapes de :

- décomposition (32) des matrices $\mathbf{M_{2f}}$ et $\mathbf{M_{2t}}$ de covariance en vecteurs propres selon les relations

$$M_{2f} = W_F^H N_F W_F$$

et $M_{2t} = W_T^H N_t W_T$, dans lesquelles :

- $\mathbf{W_F}$ est une matrice de vecteurs propres de la matrice $\mathbf{M_{2f}}$ ;
- $\mathbf{N_F}$ est une matrice diagonale comprenant des valeurs propres associées aux vecteurs propres de la matrice $\mathbf{M_{2t}}$ ;
- $\mathbf{W_T}$ est une matrice de vecteurs propres de la matrice $\mathbf{M_{2t}}$ ;
- $\mathbf{N_T}$ est une matrice diagonale comprenant des valeurs propres associées aux vecteurs propres de la matrice $\mathbf{M_{2t}}$ ;

- calcul (34) du produit de Kronecker des matrices de vecteurs propres $\mathbf{W_F}$ et $\mathbf{W_T}$ pour obtenir une matrice de vecteurs propres globale **W** ;
- calcul (34) d'une matrice diagonale de valeurs propres globale **N** égale au produit de Kronecker des matrices de valeurs propres $\mathbf{N_F}$ et $\mathbf{N_T}$; et
- calcul du vecteur canal intermédiaire **C'** à l'aide des symboles pilotes et des matrices de vecteurs propres **W** et de valeurs propres **N** en utilisant le critère du maximum a posteriori ;

et ;
- des moyens (20) d'estimation du canal de propagation (8) selon la relation $C = T^H.C'$, à partir du vecteur **C'** calculé.

**10.** Programme d'ordinateur comportant des instructions pour la mise en oeuvre du procédé selon l'une des revendications 1 à 8 lorsque le programme est exécuté par au moins un processeur.

**Patentansprüche**

1. Einschätzungsverfahren eines funkelektrischen Ausbreitungskanals (8) zwischen einem Sender (6) und einem Empfänger (2), wobei der genannte Sender ein Signal aussendet, das Raster umfasst, von denen jedes $N_f$ Frequenz-Zwischenträger verwendet, auf denen jeweils $N_t$-Symbole ausgegeben werden, auf denen von allen Symbolen bestimmte Symbole, bezeichnet als Pilote, dem genannten Empfänger (2) bekannt sind, wobei das genannte Signal durch den Empfänger (2) ausgehend von einer temporären Synchronisationsposition und einer Frequenzsynchronisationsposition synchronisiert sind, wobei das temporäre Profil des Kanals (8) symmetrisch und um eine zentrale, effektive, temporäre Position $T_{moyen}$ zentriert ist, die unterschiedlich von der temporären Synchronisation ist, wobei das Frequenzprofil des Kanals (8) symmetrisch und um eine effektive, zentrale Frequenzposition $f_{moyen}$ zentriert ist, die unterschiedlich von der Frequenz-Synchronisationsposition ist, die von dem Empfänger (2) umgesetzt wird, die **dadurch gekennzeichnet ist, dass** sie die Schritte umfasst:

   - Bestimmung (24a) einer intermediären Frequenz-Kovarianzmatrix $M_{21}$, die die Frequenzvariationen des Kanals (8) darstellen, der einem theoretischen temporären Profil des Kanals (8) entspricht, der symmetrisch und zentriert auf der temporären Synchronisationsposition ist, wobei dieses temporäre theoretische Profil des Kanals ausgehend von dem temporären Profil des in der Zeit translatierten Kanals von (-$T_{moyen}$) derart erhalten wird, dass es um die temporäre Synchronisationsposition symmetrisch ist;
   - Bestimmung (24b) einer intermediären, temporären Kovarianzmatrix $M_{21}$, die die temporären Variationen des Kanals (8) darstellen, der einem theoretischen Frequenzprofil des Kanals (8) entspricht, der symmetrisch und zentriert auf der Frequenz-Synchronisationsposition ist, wobei dieses theoretische Frequenzprofil des Kanals ausgehend von dem Frequenzprofil des in der Frequenz von (-$f_{moyen}$) translatierten Kanals derart erhalten wird, dass er um die Frequenz-Synchronisationsposition symmetrisch ist;

   - Berechnung (26) einer intermediären, globalen Kovarianzmatrix $M_2$ gemäß dem Kronecker-Produkt: $M_2 = M_{2t} \otimes M_{2f}$;
   - Berechnung (28) einer Matrix E' gemäß der Relation $E' = E.T^H$, in der $T = T_t \otimes T_f$ und in der E eine diagonale Matrix ist, umfassend die Steuersymbole, die in einem Raster an den Positionen der Pilotsymbole ausgegeben werden, wobei die anderen Symbole Null sind, $T_f$ eine diagonale Matrix ($N_f$, $N_t$) mit einer Zentrierung ist, die definiert wird durch

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$

wobei $$\varphi = 2\pi . \frac{\tau_{moyen}}{N_f}$$ und $T_t$ eine diagonale ($N_t$, $N_t$) Zentrierungsmatrix ist, die durch $T_t =$

$$\begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$

definiert ist; wobei

$$\psi = -2\pi . \frac{f_{moyen}}{N_t}$$

- Berechnung (30a; 30b) eines Säulenvektors, der einen intermediären Kanal C' darstellt, der die Relation

$$\frac{\|R - E'.C'\|^2}{\sigma^2} \; + \; C'^{H}.M_2^{-1}.C'$$

minimiert, wobei **R** ein Säulenvektor mit der Abmessung ($N_t$ x $N_f$) ist und aus den empfangenen Symbolen gebildet wird, wobei die genannte Berechnung die Teilschritte umfasst:

o Aufgliederung (32) der Matrizen **M_{2f}** und **M_{2t}** der Kovarianz an eigenen Vektoren gemäß den Relationen

$$M_{2f} = W_F^H N_F W_F$$

$$M_{2t} = W_T^H N_t W_T$$

und ', in denen

• **W_F** eine Matrix mit eigenen Vektoren der Matrix **M_{2f}** ist;
• **N_F** eine diagonale Matrix ist, die eigene Vektoren umfasst, die den eigenen Vektoren der Matrix **M_{2t}** zugeordnet sind;
• **W_T** eine Matrix mit eigenen Vektoren der Matrix **M_{2t}** ist;
• **N_T** eine diagonale Matrix ist, umfassend eigene Werte, die den eigenen Vektoren der Matrix **M_{2t}** zugeordnet sind;

◦ Berechnung (34) des Kronecker-Produkts der Matrizen mit eigenen Vektoren **W_F** und **W_T**, um eine globale Matrix mit eigenen Vektoren **W** zu erhalten;
◦ Berechnung (34) einer globalen diagonalen Matrix mit eigenen Werten N gleich dem Kronecker-Produkt der eigenen Matrizen mit eigenen Werten **N_F** und **N_T**; und
◦ Berechnung des intermediären Kanalvektors **C'** mithilfe der Pilotsymbole und der Matrizen mit eigenen Vektoren **W** und eigenen Vektoren **N** unter Verwendung des Kriteriums des nachträglichen Maximums; und;

- Einschätzung (50) des Verbreitungskanals gemäß der Relation C = T$^H$. C' ausgehend von dem berechneten Vektor C'.

2. Verfahren gemäß Anspruch 1, **dadurch gekennzeichnet, dass** der Berechnungsschritt des intermediären Kanalvektors C' die Teilschritte umfasst:

- Berechnung (36) einer Matrix **P** gemäß der Relation $\mathbf{P} = \sqrt{\mathbf{N}}.\mathbf{W}.\mathbf{E}^H.\mathbf{E}.\mathbf{W}^H.\sqrt{\mathbf{N}}$ ', in der **E** eine diagonale Matrix ist, umfassend die Pilotsymbole an den Positionen der Pilotsymbole, wobei die anderen Elemente der Diagonale Null sind:
- Aufgliederung (36) der Matrix **P** in eigene Vektoren gemäß der Relation **P = X$^H$ QX,** in der **X** eine Matrix mit eigenen Vektoren der Matrix **P** ist und **Q** eine diagonale Matrix ist, umfassend eigene Werte, die den eigenen Vektoren der Matrix **P** zugeordnet sind; und
- Berechnung des intermediären Kanalvektors **C'** gemäß der Relation

$\mathbf{C} = \mathbf{W}^H.\sqrt{\mathbf{N}}.\mathbf{X}^H.(\mathbf{Q} + \sigma^2.\mathbf{I})^{-1}.\mathbf{X}.\sqrt{\mathbf{N}}.\mathbf{W}.\mathbf{E}^H.\mathbf{R}$ , in der **C** ein Vektor ist, der den Kanal darstellt, **I** die Identitätsmatrix ist, **R** ein Vektor ist, umfassend die empfangenen Symbole und $\sigma^2$ die Leistung des Geräuschs in dem Kanal darstellt.

3. Verfahren gemäß Anspruch 1, **dadurch gekennzeichnet, dass** der Berechnungsschritt des intermediären Kanalvektors **C'** die Teilschritte umfasst:

- Extraktion (40) einer Matrix **W**' ausgehend von der Matrix **W** und einer Matrix **N'** ausgehend von der Matrix **N**, wobei die Matrix **N'** eine bestimmte Anzahl n' von eigenen Werten der Matrix **N** umfasst und die Matrix **W**' eigene Vektoren umfasst, die diesen n' eigenen Werten zugeordnet sind; und
- Berechnung des intermediären Kanalvektors **C'** mithilfe der Pilotsymbole und der Matrizen mit eigenen Vektoren **W**' und von eigenen Werten **N'** unter Verwendung des Kriteriums des nachträglichen Maximums.

4. Verfahren gemäß Anspruch 3, **dadurch gekennzeichnet, dass** die n' eigenen Vektoren die größten eigenen Vektoren der Matrix N sind.

5. Verfahren gemäß Anspruch 3, bei dem die n' eigenen Vektoren der Matrix **W**' die Kronecker-Produkte einer begrenzten Anzahl $\mathbf{n'_t}$ von eigenen Vektoren der Matrix $\mathbf{W_t}$ sind und eine begrenzte Anzahl $\mathbf{n'_t}$ von eigenen Vektoren der Matrix $\mathbf{W_T}$ und die **n'** eigenen Werte der Matrix **N'** die Produkte der eigenen Werte der Matrix $\mathbf{N_F}$ sind, die den $\mathbf{n'_f}$ eigenen Vektoren der Matrix $\mathbf{W_F}$ entsprechen und die eigenen Werte der Matrix $\mathbf{N_T}$ den $\mathbf{n't}$ eigenen Vektoren der Matrix $\mathbf{W_T}$ entsprechen.

6. Verfahren gemäß einem der Ansprüche 3 bis 5, bei dem **n'** kleiner als oder gleich der Anzahl der Pilotsymbole in jedem Raster ist.

7. Verfahren gemäß einem der Ansprüche 3 bis 6, bei dem der Berechnungsschritt des intermediären Vektors **C'** die Teilschritte umfasst:

- Berechnung (42) einer Matrix **P'** gemäß der Relation $\mathbf{P'} = \sqrt{\mathbf{N'}}.\mathbf{W'}.\mathbf{E}^H.\mathbf{E}.\mathbf{W'}^H.\sqrt{\mathbf{N'}}$ , in der **E** eine diagonale Matrix ist, umfassend die Pilotsymbole an den Positionen der Pilotsymbole, wobei die anderen Elemente der Diagonale Null sind;
- Aufgliederung (42) der Matrix **P'** in eigene Vektoren gemäß der Relation **P' = X'^H Q'X'**, in der **X'** eine Matrix mit eigenen Vektoren der Matrix **P'** ist und **Q'** eine diagonale Matrix ist, umfassend die eigenen Werte, die den eigenen Vektoren der Matrix **P'** zugeordnet sind; und
- Berechnung des intermediären Kanalvektors **C'** gemäß der Relation $\mathbf{C} = \mathbf{W'}^H.\sqrt{\mathbf{N'}}.\mathbf{X'}^H.(\mathbf{Q'} + \sigma^2.\mathbf{I})^{-1}.\mathbf{X'}.\sqrt{\mathbf{N'}}.\mathbf{W'}.\mathbf{E}^H.\mathbf{R}$ , in der **C** ein Vektor ist, der den Kanal darstellt, I die Identitätsmatrix ist, **R** ein Vektor ist, umfassend die empfangenen Symbole und $\sigma^2$ die Leistung des Geräuschs im Kanal darstellt.

8. Verfahren gemäß einem der voranstehenden Ansprüche, in dem das Signal ein Signal OFDM ist.

9. Empfängerausrüstung (2), die geeignet ist, wenigstens ein Signal von einem Sender (6) zu empfangen, das über einen funkelektrischen Verbreitungskanal (8) übertragen wird, wobei das genannte Signal Raster umfasst, die jeweils $\mathbf{N_f}$ Frequenz-Zwischenträger verwenden, wobei auf jedem davon $\mathbf{N_t}$ Symbole ausgegeben werden, wo aus allen Symbolen bestimmte Symbole, bezeichnet als Pilotsymbole, der genannten Empfängerausrüstung (2) bekannt sind, wobei das Signal durch den Empfänger (2) ausgehend von einer temporären Synchronisationsposition und einer Frequenz-Synchronisationsposition synchronisiert sind, wobei das temporäre Profil des Kanals (8) symmetrisch und um eine temporäre, effektive, zentrale Position $\mathbf{T_{moyen}}$ zentriert ist, die unterschiedlich von der temporären Synchronisationsposition ist, wobei das Frequenzprofil des Kanals (8) symmetrisch ist und um eine effektive, zentrale Frequenzposition $\mathbf{f_{moyen}}$ zentriert ist, die unterschiedlich von der Frequenz-Synchronisationsposition ist, wobei das in dem Empfänger umgesetzte Verfahren durch die Tatsache gekennzeichnet ist, dass es umfasst:

- Mittel (16) zur Bestimmung einer intermediären Frequenz-Kovarianzmatrix $\mathbf{M_{2f}}$, die die Frequenzvariationen des Kanals (8) darstellen, die einem theoretischen temporären Profil des Kanals (8) entsprechen, symmetrisch und zentriert auf der temporären Synchronisationsposition sind, wobei dieses theoretische temporäre Profil des Kanals ausgehend von dem temporären Profil des in der Zeit von ($-\mathbf{T_{moyen}}$) translatierten Kanals derart erhalten wird, dass es symmetrisch um die temporäre Synchronisationsposition ist;
- Mittel (16) zur Bestimmung einer intermediären, temporären Kovarianzmatrix $M_{2t}$, die die temporären Variationen des Kanals (8) darstellen, die einem theoretischen Frequenzprofil des Kanals (8) entsprechen, der symmetrisch und auf der Frequenz-Synchronisationsposition zentriert ist, wobei dieses theoretische Frequenzprofil des Kanals ausgehend von dem Frequenzprofil des in der Frequenz von (-$f_{moyen}$) translatierten Kanals derart erhalten wird, dass es um die Frequenz-Synchronisationsposition symmetrisch ist;

- Mittel (16) zur Berechnung einer intermediären, globalen Kovarianzmatrix $M_2$ gemäß dem Kronecker-Produkt: $M_2 = M_{2t} \otimes M_{2f}$;

- Mittel (18) zur Berechnung einer Matrix E' gemäß der Relation E' = E.T$^H$, wobei T = $T_t \otimes T_f$ ist und wobei E eine diagonale Matrix ist, umfassend die Steuersymbole, die in einem Raster an den Positionen der Pilotsymbole ausgegeben sind, wobei die anderen Symbole Null sind, $T_f$ eine diagonale Zentrierungsmatrix ($N_f$, $N_f$) ist, die

durch
$$T_f = \begin{bmatrix} 1 & 0 & . & . & 0 \\ 0 & e^{i\varphi} & . & & \\ . & . & e^{i2\varphi} & . & \\ . & & . & 0 & \\ 0 & . & . & 0 & e^{i(Nf-1)\varphi} \end{bmatrix}$$
definiert ist, wobei $\varphi = 2\pi.\dfrac{\tau_{moyen}}{N_f}$ und $T_t$ eine diagonale Zentrierungsmatrix ($N_t$, $N_t$) ist, die durch
$$T_t = \begin{bmatrix} 1 & 0 & . & . & 0 \\ 0 & e^{i\psi} & . & & \\ . & . & e^{i2\psi} & . & \\ . & & . & 0 & \\ 0 & . & . & 0 & e^{i(Nt-1)\psi} \end{bmatrix}$$
definiert ist, wobei

$$\psi = -2\pi.\frac{f_{moyen}}{N_t}$$

ist.

- Mittel (20) zur Berechnung eines Säulenvektors, der einen intermediären Kanal C' darstellt, der die Relation

$$\frac{\|R-E'.C'\|^2}{\sigma^2} + C'^H.M_2^{-1}.C'$$

minimiert, wobei $R$ ein Säulenvektor der Abmessung ($N_t$ x $N_f$) ist, der aus empfangenen Symbolen gebildet ist, wobei die genannte Berechnung die Teilschritte umfasst:

◦ Aufgliederung (32) der Kovarianz-Matrizen $M_{2f}$ und $M_{2t}$ mit eigenen Vektoren gemäß den Relationen

$$M_{2f} = W_F^H N_F W_F$$

und
$$M_{2t} = W_T^H N_t W_T$$
, in denen:

• $W_F$ eine Matrix mit eigenen Vektoren der Matrix $M_{2f}$ ist;
• $N_F$ eine diagonale Matrix ist, umfassend eigene Vektoren, die den eigenen Vektoren der Matrix $M_{2t}$ zugeordnet sind;
• WT eine Matrix mit eigenen Vektoren der Matrix $M_{2t}$ ist;
• $N_T$ eine diagonale Matrix ist, umfassend eigene Werte, die den eigenen Vektoren der Matrix $M_{2t}$ zugeordnet sind;

◦ Berechnung (34) des Kronecker-Produkts der Matrizen mit eigenen Vektoren $W_f$ und $W_T$, um eine globale Matrix mit eigenen Vektoren $W$ zu erhalten;
◦ Berechnung (34) einer globalen diagonalen Matrix mit eigenen Werten $N$ gleich dem Kronecker-Produkt der Matrizen mit eigenen Werten $N_F$ und $N_T$; und
◦ Berechnung des intermediären Kanalvektors C' mithilfe der Pilotsymbole und de Matrizen mit eigenen Vektoren **W** und mit eigenen Vektoren **N** unter Verwendung des Kriteriums des nachträglichen Maximums; und

o Mittel (20) zur Einschätzung des Verbreitungskanals (8) gemäß der Relation C = T$^H$. C' ausgehend von dem berechneten Vektor C'.

10. Computerprogramm, umfassend Anweisungen für die Umsetzung des Verfahrens gemäß einem der Ansprüche 1 bis 8, wenn das Programm durch wenigstens einen Prozessor ausgeführt wird.

**Claims**

1. Method for estimating a channel (8) for radioelectric propagation between a transmitter (6) and a receiver (2), said transmitter (6) transmitting a signal including frames that each use $N_f$ frequency subcarriers over each of which $N_t$ symbols are transmitted, wherein among the set of symbols, certain symbols, referred to as pilot symbols, are known to said receiver (2), said signal being synchronised by the receiver (2) on the basis of a time synchronisation position and a frequency synchronisation position, the time profile of the channel (8) being symmetrical and centred on an effective central time position $\tau_{avg}$ different from the time synchronisation position, the frequency profile of the channel (8) being symmetrical and centred about an effective central frequency position $f_{avg}$ different from the frequency synchronisation position, the method, implemented by the receiver (2), being **characterised by** the fact that it comprises the steps of:

- determining (24a) intermediate frequency covariance matrix $M_{2f}$ representing the frequency variations of the channel (8) corresponding to a theoretical time profile of the channel (8), symmetrical and centred on the time synchronisation position, with this theoretical time profile of the channel being obtained on the basis of the time profile of the channel translated into time ($-\tau_{avg}$) in such a way as to be symmetrical around the time synchronisation position;
- determining (24b) an intermediate time covariance matrix $M_{2t}$ representing the time variations of the channel (8) corresponding to a theoretical frequency profile of the channel (8), symmetrical and centred on the frequency synchronisation position, with this theoretical frequency profile of the channel being obtained on the basis of the frequency profile of the channel translated in frequency ($-f_{avg}$) in such a way as to be symmetrical around the frequency synchronisation position;
- calculating (26) an overall intermediate covariance matrix $M_2$ according to the Kronecker product: $M_2 = M_{2t} \otimes M_{2f}$;
- calculating (28) a matrix E' according to the relationship E'= E.T$^H$, wherein T = $T_t \otimes T_f$ and wherein E is a diagonal matrix comprising the pilot symbols transmitted in a frame to the positions of the pilot symbols, with the other symbols being nul, $T_f$ is a diagonal matrix ($N_t$, $N_t$) for centring defined by

$$T_f = \begin{bmatrix} 1 & 0 & . & . & 0 \\ 0 & e^{i\varphi} & . & & \\ . & . & e^{i2\varphi} & . & \\ . & & . & . & 0 \\ 0 & . & . & 0 & e^{i(Nf-1)\varphi} \end{bmatrix}$$ wherein $\varphi = 2\pi \cdot \dfrac{\tau_{moyen}}{N_f}$ and Tt is a diagonal matrix ($N_t$, $N_t$) for

$$T_t = \begin{bmatrix} 1 & 0 & . & . & 0 \\ 0 & e^{i\psi} & . & & \\ . & . & e^{i2\psi} & . & \\ . & & . & . & 0 \\ 0 & . & . & 0 & e^{i(Nt-1)\psi} \end{bmatrix}$$ wherein

centring defined by

$$\psi = -2\pi \cdot \dfrac{f_{moyen}}{N_t};$$

- calculating (30a; 30b) a column vector representing an intermediate channel C' that minimises the relationship

$$\frac{\|R-E'.C'\|^2}{\sigma^2} + C'^H.M_2^{-1}.C'$$

wherein R is a column vector of dimension ($N_t$ x $N_f$) comprised of received symbols, said calculation comprising the substeps of:

- breaking down (32) the covariance matrices $\mathbf{M_{2f}}$ and $\mathbf{M_{2t}}$ into eigenvectors according to the relationships $M_{2f} = W_F^H N_F W_F$ and $M_{2t} = W_T^H N_t W_T$, wherein:
- $\mathbf{W_F}$ is a matrix of eigenvectors of the matrix $\mathbf{M_{2f}}$;
- $\mathbf{N_F}$ is a diagonal matrix comprising eigenvalues associated with the eigenvectors of the matrix $\mathbf{M_{2t}}$;
- $\mathbf{W_T}$ is a matrix of eigenvectors of the matrix $\mathbf{M_{2t}}$;
- $\mathbf{N_T}$ is a diagonal matrix comprising eigenvalues associated with the eigenvectors of the matrix $\mathbf{M_{2t}}$;
- calculating (34) of the Kronecker product of the eigenvector matrices $\mathbf{W_F}$ and WT in order to obtain an overall eigenvector matrix $\mathbf{W}$;
- calculating (34) of an overall diagonal matrix of eigenvalues $\mathbf{N}$ equal to the Kronecker product of the eigenvalue matrices $\mathbf{N_F}$-and $\mathbf{N_T}$; and
- calculating the intermediate channel vector $\mathbf{C'}$ on the basis of pilot symbols and of matrices of eigenvectors $\mathbf{W}$ and of eigenvalues $\mathbf{N}$ by using the maximum a posteriori criterion;
and;
- estimating (50) the propagation channel according to the relationship $C = T^H. C'$, on the basis of the vector C' calculated.

2. Method according to claim 1, **characterised in that** the step of calculating the intermediate channel vector $\mathbf{C'}$ comprises the substeps of:

- calculating (36) a matrix $\mathbf{P}$ according to the relationship $\mathbf{P} = \sqrt{\mathbf{N}}.\mathbf{W}.\mathbf{E}^H.\mathbf{E}.\mathbf{W}^H.\sqrt{\mathbf{N}}$ wherein E is a diagonal matrix comprising pilot symbols to the positions of the pilot symbols, with the other elements of the diagonal being nul;
- breaking down (36) the matrix $\mathbf{P}$ into eigenvectors according to the relationship $P = X^H QX$ wherein $\mathbf{X}$ is a matrix of eigenvectors of the matrix $\mathbf{P}$ and $\mathbf{Q}$ is a diagonal matrix comprising eigenvalues associated with the eigenvectors of the matrix $\mathbf{P}$; and
- calculating the intermediate channel vector $\mathbf{C'}$ according to the relationship

$$\mathbf{C} = \mathbf{W}^H.\sqrt{\mathbf{N}}.\mathbf{X}^H.(\mathbf{Q} + \sigma^2.\mathbf{I})^{-1}.\mathbf{X}.\sqrt{\mathbf{N}}.\mathbf{W}.\mathbf{E}^H.\mathbf{R}$$

wherein $\mathbf{C}$ is a vector representing the channel, $\mathbf{I}$ is the identity matrix, $\mathbf{R}$ is a vector comprising the symbols received and $\sigma^2$ represents the power of the noise in the channel.

3. Method according to claim 1, **characterised in that** the step of calculating the intermediate channel vector $\mathbf{C'}$ comprises the substeps of:

- extracting (40) a matrix $\mathbf{W'}$ on the basis of the matrix $\mathbf{W}$ and a matrix $\mathbf{N'}$ on the basis of the matrix $\mathbf{N}$, with the matrix $\mathbf{N'}$ comprising a determined number n' of eigenvalues of the matrix $\mathbf{N}$ and the matrix $\mathbf{W'}$ comprising the eigenvectors associated with these n' eigenvalues; and
- calculating the intermediate channel vector $\mathbf{C'}$ on the basis of pilot symbols and of matrices of eigenvectors $\mathbf{W'}$ and of eigenvalues $\mathbf{N'}$ by using the maximum a posteriori criterion.

4. Method according to claim 3, **characterised in that** the n' eigenvalues are the largest eigenvalues of the matrix $\mathbf{N}$.

5. Method according to claim 3, wherein the n' eigenvectors of the matrix $\mathbf{W'}$ are the Kronecker products of a limited number $\mathbf{n'_t}$ of eigenvectors of the matrix $\mathbf{W_F}$ and of a limited number $\mathbf{n'_t}$ of eigenvectors of the matrix $\mathbf{W_T}$ and the n' eigenvalues of the matrix $\mathbf{N'}$ are the products of the eigenvalues of the matrix $\mathbf{N_F}$ corresponding to the $\mathbf{n'_f}$ eigenvectors of the matrix $\mathbf{W_F}$ and of the eigenvalues of the matrix $\mathbf{N_T}$ corresponding to the $\mathbf{n'_t}$ eigenvectors of the matrix $\mathbf{W_T}$.

6. Method according to one of claims 3 to 5, wherein **n'** is less than or equal to the number of pilot symbols in each frame.

7. Method according to one of claims 3 to 6, wherein the step of calculating the intermediate channel vector $\mathbf{C'}$ comprises the substeps of:

- calculating (42) a matrix $\mathbf{P'}$ according to the relationship $\mathbf{P'} = \sqrt{\mathbf{N'}}.\mathbf{W'}.\mathbf{E}^H.\mathbf{E}.\mathbf{W'}^H.\sqrt{\mathbf{N'}}$ wherein $\mathbf{E}$ is

a diagonal matrix comprising pilot symbols to the positions of the pilot symbols, with the other elements of the diagonal being nul;

- breaking down (42) the matrix **P'** into eigenvectors according to the relationship P' = X'$^H$Q'X' wherein **X'** is a matrix of eigenvectors of the matrix P' and Q' is a diagonal matrix comprising eigenvalues associated with the eigenvectors of the matrix **P'**; and

- calculating the intermediate channel vector **C'** according to the relationship

$$\mathbf{C} = \mathbf{W}'^H . \sqrt{\mathbf{N}'} . \mathbf{X}'^H . (\mathbf{Q}' + \sigma^2 . \mathbf{I})^{-1} . \mathbf{X}' . \sqrt{\mathbf{N}'} . \mathbf{W}' . \mathbf{E}^H . \mathbf{R}$$

wherein **C** is a vector representing the channel, **I** is the identity matrix, **R** is a vector comprising the symbols received and $\sigma^2$ represents the power of the noise in the channel.

8. Method according to one of the preceding claims, wherein the signal is an OFDM signal.

9. Receiving equipment (2) able to receive from a transmitter (6) at least one signal transmitted through a radioelectric propagation channel (8), said signal including frames that each use $\mathbf{N_f}$ frequency subcarriers over each of which $\mathbf{N_t}$ symbols are transmitted, wherein among the set of symbols, certain symbols, referred to as pilot symbols, are known to said receiving equipment (2), the signal being synchronised by the receiver (2) on the basis of a time synchronisation position and a frequency synchronisation position, the time profile of the channel (8) being symmetrical and centred about an effective central time position $\tau_\mathbf{avg}$ different from the time synchronisation position, the frequency profile of the channel (8) being symmetrical and centred about an effective central frequency position $\mathbf{f_{avg}}$ different from the frequency synchronisation position, the method, implemented in the receiver, is **characterised by** the fact that it comprises:

- means (16) for determining an intermediate frequency covariance matrix $\mathbf{M_{2f}}$ representing the frequency variations of the channel (8) corresponding to a theoretical time profile of the channel (8), symmetrical and centred on the time synchronisation position, with this theoretical time profile of the channel being obtained on the basis of the time profile of the channel translated into time ($\mathbf{-\tau_{avg}}$) in such a way as to be symmetrical around the time synchronisation position;

- means (16) for determining an intermediate time covariance matrix $\mathbf{M_{2t}}$ representing the time variations of the channel (8) corresponding to a theoretical frequency profile of the channel (8), symmetrical and centred on the frequency synchronisation position, with this theoretical frequency profile of the channel being obtained on the basis of the frequency profile of the channel translated in frequency ($\mathbf{-f_{avg}}$) in such a way as to be symmetrical around the frequency synchronisation position;

- means (16) for calculating an overall intermediate covariance matrix $\mathbf{M_2}$ according to the Kronecker product: $M_2 = M_{2t} \otimes M_{2f}$;

- means (18) for calculating a matrix **E'** according to the relationship E' = E.T$^H$, wherein T = T$_t \otimes$ T$_f$ and wherein **E** is a diagonal matrix comprising the pilot symbols transmitted in a frame to the positions of the pilot symbols, with the other symbols being nul, Tf is a diagonal matrix ($\mathbf{N_f}$, $\mathbf{N_f}$) for centring defined by

$$T_f = \begin{bmatrix} 1 & 0 & . & . & 0 \\ 0 & e^{i\varphi} & & . & \\ . & . & e^{i2\varphi} & . & \\ . & & . & . & 0 \\ 0 & . & . & 0 & e^{i(Nf-1)\varphi} \end{bmatrix}$$

wherein $\varphi = 2\pi$.

$$T_t = \begin{bmatrix} 1 & 0 & . & . & 0 \\ 0 & e^{i\psi} & & . & \\ . & . & e^{i2\psi} & . & \\ . & & . & . & 0 \\ 0 & . & . & 0 & e^{i(Nt-1)\psi} \end{bmatrix}$$

$\frac{\tau_{moyen}}{N_f}$ and T$_t$ is a diagonal matrix ($\mathbf{N_t}$, $\mathbf{N_t}$) for centring defined by wherein

$$\psi = -2\pi . \frac{f_{moyen}}{N_t} \ ;$$

- means (20) for calculating a column vector representing an intermediate channel **C'** that minimises the relationship $\frac{\lVert R - E'.C' \rVert^2}{\sigma^2} + C'^H M_2^{-1}.C'$ wherein R is a column vector of dimension ($N_t$ x $N_f$) comprised of received symbols, said calculation comprising the substeps of:

- breaking down (32) covariance matrices $M_{2f}$ and $M_{2t}$ into eigenvectors according to the relationships $M_{2f} = W_F{}^H N_F W_F$ and $M_{2t} = W_T{}^H N_t W_T$, wherein:
  - $W_F$ is a matrix of eigenvectors of the matrix $M_{2f}$;
  - $N_F$ is a diagonal matrix comprising eigenvalues associated with the eigenvectors of the matrix $M_{2t}$;
  - $W_T$ is a matrix of eigenvectors of the matrix $M_{2t}$;
  - $N_T$ is a diagonal matrix comprising eigenvalues associated with the eigenvectors of the matrix $M_{2t}$;
  - calculating (34) of the Kronecker product of the eigenvector matrices $W_F$ and $W_T$ in order to obtain an overall eigenvector matrix **W**;
  - calculating (34) of an overall diagonal matrix of eigenvalues N equal to the Kronecker product of the eigenvalue matrices $N_F$ and $N_T$; and
  - calculating the intermediate channel vector **C'** on the basis of pilot symbols and of matrices of eigenvectors **W** and of eigenvalues **N** by using the maximum a posteriori criterion;

and;

- means (20) for estimating the propagation channel (8) according to the relationship $C = T^H . C'$, on the basis of the vector C' calculated.

10. Computer program comprising instructions for the implementing of the method according to one of claims 1 to 8 when the program is executed by at least one processor.

Figure 1

Figure 2

```
┌─────────────────────────────────┐
│         M₂F ,M₂T                │ ── 24a/24b
└─────────────────────────────────┘
              │
              ▼
┌─────────────────────────────────┐
│            M₂                   │ ── 26
└─────────────────────────────────┘
              │
              ▼
┌─────────────────────────────────┐
│            E'                   │ ── 28
└─────────────────────────────────┘
              │
┌─────────────┼───────────────────┐ ── 30b
│             ▼                   │
│ ┌───────────────────────────┐   │ ── 32
│ │  SVD (M₂F), SVD (M₂T)     │   │
│ └───────────────────────────┘   │
│             │                   │
│             ▼                   │
│ ┌───────────────────────────┐   │ ── 34
│ │         W, N              │   │
│ └───────────────────────────┘   │
│             │                   │
│             ▼                   │
│ ┌───────────────────────────┐   │ ── 40
│ │         W', N'           │   │
│ └───────────────────────────┘   │
│             │                   │
│             ▼                   │
│ ┌───────────────────────────┐   │ ── 42
│ │       P', SVD(P')        │   │
│ └───────────────────────────┘   │
│             │                   │
│             ▼                   │
│ ┌───────────────────────────┐   │ ── 44
│ │          C'              │   │
│ └───────────────────────────┘   │
│             │                   │
└─────────────┼───────────────────┘
              ▼
┌─────────────────────────────────┐
│            C                    │ ── 50
└─────────────────────────────────┘
```

Figure 3

**EP 3 158 700 B1**

**Documents brevets cités dans la description**

- FR 2814011

- FR 2983666 A1